(19) **Europäisches Patentamt / European Patent Office / Office européen des brevets**

(11) **EP 4 131 627 A1**

(12) **EUROPEAN PATENT APPLICATION**
published in accordance with Art. 153(4) EPC

(43) Date of publication:
08.02.2023 Bulletin 2023/06

(21) Application number: 21781623.0

(22) Date of filing: 26.03.2021

(51) International Patent Classification (IPC):
*H01M 50/489* (2021.01)    *B32B 5/32* (1968.09)
*C08F 220/24* (1974.07)    *H01M 50/434* (2021.01)
*H01M 50/443* (2021.01)    *H01M 50/446* (2021.01)
*H01M 50/451* (2021.01)

(52) Cooperative Patent Classification (CPC):
**B32B 5/32; C08F 220/24; H01M 50/434;
H01M 50/443; H01M 50/446; H01M 50/451;
H01M 50/489; Y02E 60/10; Y02P 70/50**

(86) International application number:
**PCT/JP2021/012849**

(87) International publication number:
**WO 2021/200649 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 31.03.2020 JP 2020062394

(71) Applicant: **Toray Industries, Inc.**
**Tokyo 103-8666 (JP)**

(72) Inventors:
• **KAMON, Keiichi**
  **Otsu-shi, Shiga 520-8558 (JP)**
• **KAI, Nobuyasu**
  **Otsu-shi, Shiga 520-8558 (JP)**
• **TANAKA, Hiroko**
  **Nasushiobara-shi, Tochigi 329-2763 (JP)**
• **TSUKUDA, Akimitsu**
  **Otsu-shi, Shiga 520-8558 (JP)**
• **IMAZU, Naoki**
  **Nagoya-shi, Aichi 455-8502 (JP)**

(74) Representative: **Kador & Partner PartG mbB**
**Corneliusstraße 15**
**80469 München (DE)**

(54) **POROUS FILM, SEPARATOR FOR SECONDARY BATTERY, AND SECONDARY BATTERY**

(57) Provided is a porous film having high adhesiveness to electrodes and having excellent thermal dimensional stability and battery properties. This porous film includes a porous substrate and, on at least one surface of the porous substrate, a porous layer including inorganic particles and organic particles A, said organic particles A having adhesiveness to electrodes. The inorganic particle content in the porous layer is 50% by mass to 95% by mass. In 50 measurements of the surface elastic modulus of the porous layer, the value of $\alpha/\beta$ is 10 to 40, where $\alpha$ is the surface elastic modulus indicating the inorganic particles, and $\beta$ is the minimum of the measured values, and the percentage of the 50 measured values that are included in the range from $\beta$ to $2\beta$ is 30% to 100%.

EP 4 131 627 A1

**Description**

Technical Field

The present invention relates to a porous film, a separator for secondary battery, and a secondary battery.

Background Art

Secondary batteries such as lithium ion batteries are widely used in portable digital devices such as smartphones, tablets, mobile phones, notebook computers, digital cameras, digital video cameras, and portable game machines; portable devices such as electric tools, electric motorcycles, and power-assisted auxiliary bicycles; and automotive applications such as electric vehicles, hybrid vehicles, and plug-in hybrid vehicles.

Lithium ion batteries generally have a configuration in which a secondary battery separator and an electrolyte are interposed between a positive electrode in which a positive electrode active material is layered on a positive electrode current collector and a negative electrode in which a negative electrode active material is layered on a negative electrode current collector.

As the secondary battery separator, a polyolefin-based porous substrate is used. Examples of properties required for secondary battery separators include: a property of permitting ion migration with an electrolytic solution contained in porous structures; and shutdown characteristics of stopping discharging by melted separator to close the porous structure and to halt the ion migration at the time of abnormal heat generation in the lithium ion battery.

In addition, with increased capacity and output of lithium ion batteries in recent years, separators for secondary batteries are required to have a high level of safety, and the thermal dimensional stability has been required for preventing short circuits due to contact between the positive electrode and the negative electrode, which is caused by thermal shrinkage of the separators for secondary batteries at a high temperature.

Furthermore, in the manufacturing process of secondary batteries, prior to being impregnated with an electrolytic solution, the separators are required to have adhesiveness to electrodes: in order to maintain a layered structure in which a positive electrode, a separator, and a negative electrode are layered when the layered body is transported; in order the shape of the layered body in which positive electrode, separator, and negative electrode are layered and wound not to deform when the hot-pressed layered body is inserted into a can having a shape of cylinder, square, etc.; in order the layered bodies to be hot-pressed to put an increased number of layered bodies into the can thereby enhancing the energy density, or in order laminated type secondary batteries not to deform after inserted into an exterior material.

On the other hand, the lithium ion batteries are also required to have excellent battery properties such as higher output and longer life, and when secondary battery separators are imparted with thermal dimensional stability, they are required to exhibit long lasting excellent battery properties without deteriorated high output characteristics.

In response to these requirements, Patent Literature 1 envisages to achieve a balance between the adhesiveness to electrodes and blocking resistance by disposing an adhesive layer formed on a heat resistant layer. In Patent Literature 2, the adhesiveness to electrodes is increased by establishing a specified relationship between the particle size of particulate polymers and the particle size of inorganic particles.

Citation List

Patent Literature

Patent Literature 1: JP 6191597 B2
Patent Literature 2: WO 2018/034094 A

Summary of Invention

Technical Problem

As described above, the adhesiveness of the electrode to the separator is required in the hot pressing step of the process of manufacturing secondary batteries. It is necessary to achieve both the thermal dimensional stability and the battery properties. In view of the above problems, an object of the present invention is to provide a porous film that has adhesiveness to electrodes and excellent thermal dimensional stability, and that imparts excellent characteristics to batteries, and to provide a separator for secondary batteries.

Solution to Problem

Therefore, the present inventors have conducted intensive studies in order to provide a low-cost porous film having excellent thermal dimensional stability, adhesiveness to electrodes, and excellent battery properties. As a result, it has been turned out that the test conditions described in Patent Literatures 1 and 2 are inadequate to evaluate blocking resistance, and the blocking resistance obtained in the technique described in Patent Literature 1 was insufficient under appropriate test conditions, and it has been found that the adhesiveness to electrodes was insufficient when the blocking resistance was improved. It has been also found that when hot pressing caused the swelling of the adhesive layer which filled voids in the electrode active material and the separator, thereby decreasing the void ratio, which leads to decreased ion transport numbers, consequently the battery properties were decreased as well. Furthermore, the secondary battery separator disclosed in Patent Literature 1 is expensive since an adhesive layer is coated on a heat resistant layer, and hence it is difficult to cost-effectively achieve a balance among thermal dimensional stability, adhesiveness, and battery properties by the techniques described in Patent Literatures 1 and 2.

In order to solve the above problems, the porous film of the present invention has the following configuration.

(1) A porous film including: a porous substrate; and a porous layer on at least one surface of the porous substrate, the porous layer containing inorganic particles and organic particles A, the organic particles A having adhesiveness to electrodes, wherein the inorganic particles are contained in the porous layer in an amount ranging from 50% by mass to 95% by mass, and in 50 measurements of a surface elastic modulus of the porous layer, a value of $\alpha/\beta$ is ranging from 10 to 40, where $\alpha$ is the surface elastic modulus indicating the inorganic particles, and $\beta$ is a minimum of measured values, and the percentage of the 50 measured values that are included in the range from $\beta$ to $2\beta$ is 30% to 100%.

(2) The porous film according to (1), wherein the organic particles A have a mixture that contains: a polymer that includes a fluorine-containing (meth)acrylate monomer; and a polymer that includes a monomer having two or more reactive groups per molecule, or the organic particles A have a copolymer that contains: a fluorine-containing (meth)acrylate monomer; and a monomer having two or more reactive groups per molecule.

(3) The porous film according to (2), wherein the particles A contain the monomer having two or more reactive groups per molecule in an amount of more than 10% by mass and 30% by mass or less where all components of the particles A are assumed to constitute 100% by mass.

(4) The porous film according to (2) or (3), wherein the monomer having two or more reactive groups per molecule is a (meth)acrylate having two or more functional groups.

(5) The porous film according to any one of (2) to (4), wherein the monomer having two or more reactive groups per molecule is alkylene glycol di(meth)acrylate or urethane di(meth)acrylate.

(6) The porous film according to any one of (1) to (5), wherein the organic particles A further include at least one monomer selected from the group consisting of an unsaturated carboxylic acid monomer, a (meth)acrylic acid ester monomer, a styrene-based monomer, an olefin-based monomer, a diene-based monomer, and an amide-based monomer, and the organic particles A contain the monomer in an amount of 20% by mass or more and 80% by mass or less.

(7) The porous film according to any of (2) to (6), wherein the copolymer having the fluorine-containing (meth)acrylate monomer and the monomer having two or more reactive groups per molecule is a copolymer further containing at least one monomer selected from the group consisting of an unsaturated carboxylic acid monomer, a (meth)acrylic acid ester monomer, a styrene-based monomer, an olefin-based monomer, a diene-based monomer, and an amide-based monomer.

(8) The porous film according to any one of (2) to (7), wherein the organic particles A contain the fluorine-containing (meth)acrylate monomer in an amount of more than 20% by mass and 80% by mass or less.

(9) The porous film according to (6) or (7), wherein at least one of the (meth)acrylic acid ester monomers is a (meth)acrylic acid ester monomer having a hydroxyl group, and the organic particles A contain the (meth)acrylic acid ester monomer having a hydroxyl group in an amount of 1% by mass or more and 10% by mass or less.

(10) The porous film according to any one of (1) to (9), wherein when the porous film is immersed at 25°C for 24 hours in a solvent including at least one of dimethyl carbonate, ethyl methyl carbonate, and diethyl carbonate, the porous film after the immersion has an air permeation resistance 1.0 time or more and 2.0 times or less larger than that before the immersion.

(11) The porous film according to any one of (1) to (10), wherein the organic particles A have a glass transition temperature of -30°C or higher and 100°C or lower.

(12) The porous film according to any one of (1) to (11), wherein the porous layer contains fluorine-free organic particles B.

(13) A separator for secondary battery, including the porous film according to any one of (1) to (12).

(14) A secondary battery, including the separator for secondary battery according to (13).

Advantageous Effects of Invention

According to the porous film of the present invention, it is possible to provide cost-effectively a secondary battery having adhesiveness to electrodes and having excellent thermal dimensional stability and battery properties.

Description of Embodiments

A porous film of the present invention includes: a porous substrate; and a porous layer on at least one surface of the porous substrate, the porous layer containing inorganic particles and organic particles A, the organic particles A having adhesiveness to electrodes, wherein the inorganic particle content in the porous layer is 50% by mass to 95% by mass, and in 50 measurements of the surface elastic modulus of the porous layer, the value of $\alpha/\beta$ is 10 to 40, where $\alpha$ is the surface elastic modulus indicating the inorganic particles, and $\beta$ is the minimum of the measured values, and the percentage of the 50 measured values that are included in the range from $\beta$ to $2\beta$ is 30% to 100%.

Hereinafter, the present invention will be described in detail.

In the present specification, the "polymer that includes a fluorine-containing (meth)acrylate monomer" refers to a homopolymer that includes a fluorine-containing (meth)acrylate monomer or a copolymer containing a fluorine-containing (meth)acrylate monomer. The wording "polymer that includes a monomer having two or more reactive groups per molecule" refers to a homopolymer that includes a monomer having two or more reactive groups per molecule or a copolymer containing a monomer having two or more reactive groups per molecule. In addition, as the "organic resin" included in the particles A, there may be indicated a homopolymer that includes a fluorine-containing (meth)acrylate monomer, a homopolymer that includes a monomer having two or more reactive groups per molecule, a homopolymer that includes a monomer included in a specific monomer group, and a copolymer that includes a fluorine-containing (meth)acrylate monomer and a monomer having two or more reactive groups per molecule.

[Porous layer]

The porous layer of the present embodiment contains inorganic particles and organic particles A. The mass content of the inorganic particles with respect to the entire porous layer is 50% by mass or more and 95% by mass or less. The content is preferably 60% by mass or more and 90% by mass or less, and more preferably 70% by mass or more and 85% by mass or less.

With respect to the surface elastic modulus of the porous layer, when the surface elastic modulus indicating the inorganic particles is denoted by $\alpha$, and the minimum value out of 50 measurements is denoted by $\beta$, the value of $\alpha/\beta$ is 10 or more and 40 or less, and the percentage of the measurement value included in the range from $\beta$ to $2\beta$ is 30% or more and 100% or less. Preferably, the value of $\alpha/\beta$ is 10 or more and 25 or less, and the percentage of the measured values included in the range from $\beta$ to $2\beta$ is 30% or more and 75% or less.

As the inorganic particle content in the porous layer is 50% by mass to 95% by mass, and in 50 measurements of the surface elastic modulus of the porous layer, the value of $\alpha/\beta$ is 10 to 40, where $\alpha$ is the surface elastic modulus indicating the inorganic particles, and $\beta$ is the minimum of the measured values, and the percentage of the 50 measured values that are included in the range from $\beta$ to $2\beta$ is 30% to 100%, whereby the porous film can be provided with high adhesiveness to electrodes, excellent thermal dimensional stability, and battery properties.

When the mass content of the inorganic particles with respect to the entire porous layer is 50% by mass or more and 95% by mass or less, thermal dimensional stability can be made adequate and short circuits due to foreign matters can be sufficiently suppressed. When the mass content of the inorganic particles with respect to the entire porous layer is less than 50% by mass, there may be a case where the thermal dimensional stability is inadequate and short circuits due to foreign matters cannot be sufficiently suppressed, and when the mass content is more than 95% by mass, there may be a case where the binding property of the inorganic particles to the porous substrate may be deteriorated, leading to occurrence of detachment of powders.

With respect to the surface elastic modulus, the value of $\alpha/\beta$ of the porous layer is less than 10, the flexibility of the organic particles A described later is poor, and sufficient adhesiveness to electrodes cannot be obtained. In contrast, when $\alpha/\beta$ is more than 40, the flexibility is too high, consequently the particle shape is greatly changed and the battery properties are deteriorated. When the percentage of the measured values included in the range from $\beta$ to $2\beta$ is less than 30%, an effect of the uneven distribution to the surface of the porous layer is small, and there may be a case where sufficient adhesiveness to electrodes is not obtained.

Any known method may be used to measure the mass content (% by mass) of the inorganic particles in the porous layer, and for example, first, the porous layer is detached from the porous film with water and an organic solvent such as an alcohol, and water and the organic solvent such as an alcohol are sufficiently dried to give components contained in the porous layer. After measuring the mass of the total amount of the obtained components, the components are subjected to a combustion at a high temperature at which the organic resin component melts and decomposes, and only the mass of the inorganic particles is measured. The inorganic particle content in the porous layer can be calculated in percentage by mass from the formula: (mass of inorganic particles/mass of total amount of components) × 100. The content of the organic resin component can be calculated by subtracting the mass of the inorganic particles from the total amount of the components of the porous structure.

(Inorganic particles)

When the porous layer contains inorganic particles, the thermal dimensional stability can be improved and short circuits due to foreign matters can be suppressed.

Specific examples of the inorganic particles include inorganic oxide particles such as aluminum oxide, boehmite, silica, titanium oxide, zirconium oxide, iron oxide, and magnesium oxide; inorganic nitride particles such as aluminum nitride and silicon nitride; and hardly soluble ion crystal particles such as calcium fluoride, barium fluoride, and barium sulfate. Among these particles particularly preferable are aluminum oxide having an effect of increasing the strength, boehmite and barium sulfate, which have an effect of reducing the wear of components in the step of dispersing the organic particles A and the inorganic particles. These particles may be used singly, or in mixture of two or more kinds thereof.

The average particle size of the inorganic particles to be used is preferably 0.05 um or more and 5.0 $\mu$m or less. The average particle size is more preferably 0.10 um or more and 3.0 um or less, still more preferably 0.20 um or more and 1.0 um or less. When the average particle size is 0.05 $\mu$m or more, the air permeation resistance can be suppressed from being increased, so that battery properties are improved. In addition, the pore diameter increases, so that the impregnation property of the electrolytic solution is improved, and the productivity is also improved. When the thickness is 5.0 $\mu$m or less, the thickness of the porous layer becomes appropriate, and deterioration of battery properties can be suppressed as well as a sufficient thermal dimensional stability can be obtained.

The average aspect ratio (major axis diameter/thickness) of the inorganic particles is preferably 0.5 or more and less than 1.5. The average aspect ratio is more preferably 0.7 or more and less than 1.3, and still more preferably 0.9 or more and less than 1.1. When the ratio is 0.5 or more and less than 1.5, the inorganic particles approach a spherical shape, so that the ion transport number is increased and the battery properties are improved.

Examples of the shape of the particles to be used include a spherical shape, a needle shape, a rod shape, and an elliptical shape, and it is not restricted to any particular shape. Among them, the spherical shape is preferable from the viewpoint of surface modification property, dispersibility, and coating properties.

The average particle size of the inorganic particles herein is a value obtained by measurement using the following method. Using a field emission scanning electron microscope (S-3400N manufactured by Hitachi, Ltd.), there were obtained an image of the surface of the porous layer at a magnification of 30,000 times and an EDX image for elements only contained in inorganic particles of the porous layer that includes components of inorganic particles and organic particles A. The image size obtained in this observation is 4.0 um × 3.0 $\mu$m. Note that the number of pixels is 1,280 pixels × 1,024 pixels, and the size of one pixel is 3.1 nm × 2.9 nm.

Next, among quadrangles that have at least three sides being in contact with the periphery of one particle out of the inorganic particles identified from the obtained EDX image, there was drawn a quadrangle that has the smallest area completely surrounding the particle with the three sides, and the length of the longest side among the four sides of the quadrangle was defined as the major axis diameter.

Next, the major axis diameter is defined as the particle size, the major axis diameters of all the particles on the image were measured, and the major axis diameter was regarded as the particle size, the arithmetic average value thereof was defined as the average particle size. Note that in a case where the number of the observed particles was less than 50 in the image taken, the inorganic particles were measured in such a way that multiple images were taken so the total number of all the inorganic particles included in the multiple images as to be at least 50, and the arithmetic average value thereof was defined as the average particle size.

The average aspect ratio (major axis diameter/thickness) of the inorganic particles is a value obtained by measurement using the following method. The major axis diameter is obtained by measuring the average particle size. The thickness is obtained by using the following method. A double-sided tape is attached onto the measurement cell, whereby the inorganic particles are adhered to the entire surface of the double-sided tape. Next, platinum or gold is vacuum-deposited thereon for several minutes thereby preparing a sample for observation by a field emission scanning electron microscope (S-3400N manufactured by Hitachi, Ltd.). The prepared sample was observed at a magnifying power of 20,000. In an image produced by electron microscopic observation, 20 particles that stand vertically with respect to the double-sided tape were chosen, and the average value of the thicknesses of 20 inorganic particles was defined as the thickness of the inorganic particles. Thereafter, the major axis diameter was divided by the thickness to obtain the average aspect ratio of the inorganic particles.

(Organic particles A)

The organic particles A in the present invention is preferably a particle having a mixture containing a polymer that includes a fluorine-containing (meth)acrylate monomer and a polymer that includes a monomer having two or more reactive groups per molecule, or a copolymer containing a fluorine-containing (meth)acrylate monomer and a monomer having two or more reactive groups per molecule. When a polymer that includes a fluorine-containing (meth)acrylate monomer or a copolymer that includes a fluorine-containing (meth)acrylate monomer and a monomer having two or more reactive groups per molecule are contained, the surface free energy of the organic particles A can be lowered. By lowering the surface free energy of the organic particles A, the organic particles A can be unevenly distributed to the surface when the coating liquid obtained by mixing the organic particles A and the inorganic particles is coated on the porous substrate, so that the adhesiveness of the porous layer to electrodes can be improved. In the present invention, the term "(meth)acrylate" means acrylate and/or methacrylate.

Examples of the fluorine-containing (meth)acrylate monomer include 2,2,2-trifluoroethyl (meth)acrylate, 2,2,3,3,3-pentafluoropropyl (meth)acrylate, 2-(perfluorobutyl) ethyl (meth)acrylate, 3-(perfluorobutyl)-2-hydroxypropyl (meth)acrylate, 2-(perfluorohexyl) ethyl (meth)acrylate, 3-perfluorohexyl-2-hydroxypropyl (meth)acrylate, 3-(perfluoro-3-methylbutyl)-2-hydroxypropyl (meth)acrylate, 1H, 1H, 3H-tetrafluoropropyl (meth)acrylate, 1H, 1H, 5H-octafluoropentyl (meth)acrylate, 1H, 1H, 7H-dodecafluoroheptyl (meth)acrylate, 1H-1-(trifluoromethyl) trifluoroethyl (meth)acrylate, 1H, 1H, 3H-hexafluorobutyl (meth)acrylate, 1,2,2,2-tetrafluoro-1-(trifluoromethyl) ethyl (meth)acrylate, 2-(perfluorooctyl) ethyl (meth)acrylate. One kind of the fluorine-containing (meth)acrylate monomer may be used singly, or two or more kinds thereof may be used in combination at any ratio.

The content of the fluorine-containing (meth)acrylate monomer in the organic particles A is preferably more than 20% by mass, more preferably 22% by mass or more, and still more preferably 25% by mass or more. The content is preferably 80% by mass or less, more preferably 70% by mass or less, and still more preferably 60% by mass or less. When the content is within the above-described range, a sufficient adhesiveness to electrodes can be obtained.

The content of the fluorine-containing (meth)acrylate monomer in the organic particles A can be measured by using any known method. For example, first, the porous layer is detached from the porous film with water and an organic solvent such as an alcohol, and water and the organic solvent such as an alcohol are sufficiently dried thereby obtaining components contained in the porous layer. An organic solvent that dissolves the organic resin component is added to the obtained components thereby dissolving only the organic resin component. Subsequently, the organic solvent is dried and removed from the solution in which the organic resin component is dissolved, thereby extracting only the organic resin component. Using the obtained organic resin component, the content can be calculated from the signal intensity indicating the fluorine-containing (meth)acrylate monomer by nuclear magnetic resonance ($^1$H-NMR, $^{19}$F-NMR, $^{13}$C-NMR), infrared absorption spectroscopy (IR), X-ray photoelectron spectroscopy (XPS), X-ray fluorescence analysis (EDX), elemental analysis, pyrolysis gas chromatograph mass spectrometer (pyrolysis GC/MS), or the like. In particular, after the confirmation of the presence of the fluorine-containing (meth)acrylate monomer by pyrolysis GC/MS, the content of the fluorine-containing (meth)acrylate monomer can be determined by $^{13}$C-NMR (the organic resin component and an appropriate amount of a solvent (deuterated chloroform) were filled into a sample tube for solid NMR, followed by the measurement in DD/MAS method after the mixture was allowed to stand overnight).

The number of fluorine atoms in the fluorine-containing (meth)acrylate that is included in the fluorine-containing (meth)acrylate monomer is preferably 3 or more and 13 or less. The number is more preferably 3 or more and 11 or less, and still more preferably 3 or more and 9 or less. By limiting the number within the above range, it is possible to achieve both the coating properties and the reduced surface free energy of the organic particles A. When the number of fluorine atoms is 3 or more, the reduction of the surface free energy of the organic particles A becomes sufficient, and the adhesiveness to electrodes becomes sufficient. When the number of fluorine atoms is 13 or less, the coating properties to the porous substrate is secured, and productivity is improved.

The number of fluorine atoms of the fluorine-containing (meth)acrylate monomer can be measured by using a known method. For example, first, the porous layer is detached from the porous film with water and an organic solvent such as an alcohol, and water and the organic solvent such as an alcohol are sufficiently dried thereby obtaining components contained in the porous layer. An organic solvent that dissolves the organic resin component is added to the obtained components thereby dissolving only the organic resin component, so that the organic resin component is separated from the inorganic particles. Subsequently, the organic solvent is dried and removed from the solution in which the organic resin component is dissolved, thereby extracting only the organic resin component. Using the obtained organic resin component, the content can be calculated from the signal intensity indicating the fluorine-containing (meth)acrylate monomer by nuclear magnetic resonance ($^1$H-NMR, $^{19}$F-NMR, $^{13}$C-NMR), infrared absorption spectroscopy (IR), X-ray photoelectron spectroscopy (XPS), X-ray fluorescence analysis (EDX), elemental analysis, pyrolysis gas chromatograph mass spectrometer (pyrolysis GC/MS), or the like. Among them, pyrolysis GC/MS is particularly useful.

The organic particles A contains a polymer that includes a monomer having two or more reactive groups per molecule or a copolymer that includes a fluorine-containing (meth)acrylate monomer and a monomer having two or more reactive groups per molecule. That is, when a polymer that includes a monomer having two or more reactive groups per molecule or a copolymer that includes a fluorine-containing (meth)acrylate monomer and a monomer having two or more reactive groups per molecule are contained, it is possible to achieve polymer particles having excellent electrolytic solution resistance with suppressed swelling property in an electrolytic solution and excellent adhesiveness to electrodes.

The content of the monomer having two or more reactive groups per molecule is more than 10% by mass and 30% by mass or less based on the total mass of the organic particles A being 100% by mass. The content is preferably 11% by mass or more, more preferably 12% by mass or more, and particularly preferably 13% by mass or more. The content is preferably 25% by mass or less, more preferably 20% by mass or less, and particularly preferably 18° by mass or less. When the amount of the monomer having two or more reactive groups per molecule is more than 10% by mass, a sufficient adhesiveness to electrodes can be provided. When the content is 30% by mass or less, organic particles A having excellent stability can be obtained. In addition, excellent battery properties can be imparted.

The content of the monomer having two or more reactive groups per molecule contained in the organic particles A can be measured by using a known method. For example, first, the porous layer is detached from the porous film with water and an organic solvent such as an alcohol, and water and the organic solvent such as an alcohol are sufficiently dried thereby obtaining components contained in the porous layer. An organic solvent that dissolves the organic resin component is added to the obtained components thereby dissolving only the organic resin component. Subsequently, the organic solvent is dried and removed from the solution in which the organic resin component is dissolved, thereby extracting only the organic resin component. Using the obtained organic resin component, the content can be calculated from the signal intensity indicating a monomer having two or more reactive groups per molecule by nuclear magnetic resonance ($^1$H-NMR, $^{19}$F-NMR, $^{13}$C-NMR), infrared absorption spectroscopy (IR), X-ray photoelectron spectroscopy (XPS), X-ray fluorescence analysis (EDX), elemental analysis, pyrolysis gas chromatograph mass spectrometer (pyrolysis GC/MS), or the like. In particular, upon confirmation of the presence of a monomer having two or more reactive groups per molecule by pyrolysis GC/MS, the content of the monomer having two or more reactive groups per molecule can be determined by $^{13}$C-NMR (into a solid NMR sample tube was filled the organic resin component and an appropriate amount of a solvent (deuterated chloroform), followed by measurement in DD/MAS method after the mixture was allowed to stand overnight).

As the polymer that includes a monomer having two or more reactive groups per molecule, there can be used a monomer capable of forming a crosslinked structure during polymerization. In particular, it is preferable to use a (meth)acrylate monomer, and it is more preferable to use an alkylene glycol di(meth)acrylate and a urethane di(meth)acrylate.

More specifically, examples of the monomer having two or more reactive groups per molecule include: a monofunctional monomer having a crosslinkable group that can be cured by thermal-crosslinking and one or more olefinic double bonds per molecule; and a polyfunctional monomer having two or more olefinic double bonds per molecule. The number of olefinic double bonds may be one per molecule or two or more per molecule. Examples of the crosslinkable group which can be thermally crosslinked include an epoxy group, an N-methylol amide group, an oxetanyl group, an oxazoline group, and combinations thereof.

Examples of monofunctional monomers having an epoxy group as a crosslinkable group which can be cured by thermal crosslinking and one or more olefinic double bonds per molecule include: unsaturated glycidyl ethers such as vinyl glycidyl ether, allyl glycidyl ether, butenyl glycidyl ether, and o-allyl phenyl glycidyl ether; monoepoxides of dienes or polyenes, such as butadiene monoepoxides, chloroprene monoepoxides, 4,5-epoxy-2-pentene, 3,4-epoxy-1-vinylcyclohexene, 1,2-epoxy-5,9-cyclododecadiene; alkenyl epoxides such as 3,4-epoxy-1-butene, 1,2-epoxy-5 hexene, and 1,2-epoxy-9-decene; and glycidyl esters of unsaturated carboxylic acids such as glycidyl acrylate, glycidyl methacrylate, glycidyl crotonate, glycidyl-4-heptenoate, glycidyl sorbate, glycidyl linoleate, glycidyl-4-methyl-3-pentenoate, glycidyl esters of 3-cyclohexene carboxylic acid, and glycidyl esters of 4-methyl-3-cyclohexene carboxylic acid.

Examples of monofunctional monomers having an N-methylol amide group as a crosslinkable group which can be thermally crosslinked and one or more olefinic double bonds per molecule include (meth)acrylamides having a methylol group such as N-methylol (meth)acrylamide.

Examples of monofunctional monomers having an oxetanyl group as a crosslinkable group which can be thermally crosslinked and one or more olefinic double bonds per molecule include 3-((meth)acryloyloxymethyl) oxetane, 3-((meth)acryloyloxymethyl)-2-trifluoromethyloxetane, 3-((meth)acryloyloxymethyl)-2-phenyloxetane, 2-((meth)acryloyloxymethyl) oxetane, and 2-((meth)acryloyloxymethyl)-4-trifluoromethyloxetane.

Examples of monofunctional monomers having an oxazoline group as a crosslinkable group which can be thermally crosslinked and one or more olefinic double bonds per molecule include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5 ethyl-2-oxazoline.

Examples of the polyfunctional monomer having two or more olefinic double bonds per molecule include allyl (meth)acrylate, ethylene range (meth)acrylate, diethylene glycol di (meth)acrylate, triethylene glycol di (meth)acrylate, tetraethylene glycol di (meth)acrylate, trimethylolpropane-tri (meth)acrylate, dipropylene glycol diallyl ether, polyglycol diallyl ether, triethylene glycol divinyl ether, hydroquinone diallyl ether, tetraallyloxyethane, trimethylolpropane-diallyl ether, allyl or vinyl ethers of other polyfunctional alcohols, triallylamine, methylene bisacrylamide, divinylbenzene, alkylene glycol di (meth)acrylate, and urethane di (meth)acrylate.

A homopolymer that includes the monomer having two or more reactive groups per molecule preferably has a glass transition temperature of -50°C or higher and 0°C or lower. More preferably, the glass transition temperature is -45°C or higher. The term "glass transition temperature" used here refers to a glass transition temperature defined as follows: in differential scanning calorimetry (DSC) in accordance with "JIS K 7121: 2012, Testing Methods for Transition Temperatures of Plastics", in the second temperature rise curve after initial first temperature rising and cooling, a point of intersection between a straight line, which is extended from the baseline of the curve at a temperature lower than the transition temperature toward higher temperature side, and a tangent line drawn at a point where the curve has a largest gradient in a region of stepwise change of the glass transition is defined as a glass transition temperature.

In the present invention, the mixture containing a polymer that includes a fluorine-containing (meth)acrylate monomer and a polymer that includes a monomer having two or more reactive groups per molecule can optionally contain a polymer that includes a monomer selected from a specific monomer group. The copolymer containing a fluorine-containing (meth)acrylate monomer and a monomer having two or more reactive groups per molecule may be a copolymer optionally containing a monomer selected from a specific monomer group. When a copolymer contains a monomer selected from a specific monomer group, the surface free energy and the glass transition temperature of the organic particles A can be adjusted to predetermined conditions.

When the organic particles A is of a core-shell type, the organic particles A can be a core-shell type particles which include: a polymer that includes a monomer selected from a specific monomer group formed as a core; and around which, a mixture containing a polymer that includes a monomer having two or more reactive groups per molecule formed as a shell, or a copolymer containing a fluorine-containing (meth)acrylate monomer and a monomer having two or more reactive groups per molecule formed as a shell. The "core-shell type" used here includes a type in which the core portion is partially covered with the shell portion and the core portion and the shell portion coexist on the surface, as well as a type in which the core portion is entirely covered with the shell portion.

As a monomer included in the specific monomer group, there are exemplified an unsaturated carboxylic acid monomer, a (meth)acrylic acid ester monomer, a styrene-based monomer, an olefin-based monomer, a diene-based monomer, and an amide-based monomer. In the present invention, the "(meth)acrylic acid ester monomer" means an acrylic acid ester monomer and a methacrylic acid ester monomer.

As monomers included in these specific monomer groups, there are exemplified: unsaturated carboxylic acids such as acrylic acid, methacrylic acid, and crotonic acid; acrylic acid esters such as methyl acrylate, ethyl acrylate, n-propyl acrylate, isopropyl acrylate, n-butyl acrylate, isobutyl acrylate, t-butyl acrylate, pentyl acrylate, neopentyl acrylate, isoamyl acrylate, hexyl acrylate, heptyl acrylate, octyl acrylate, 2-ethylhexyl acrylate, nonyl acrylate, decyl acrylate, lauryl acrylate, 2-dimethylaminoethyl acrylate, 2-diethylaminoethyl acrylate, 2-dipropylaminoethyl acrylate, 2-diphenylaminoethyl acrylate, 3-(N,N-dimethylamino) propyl acrylate, n-tetradecyl acrylate, stearyl acrylate, cyclohexyl acrylate, hydroxyethyl acrylate, benzyl acrylate, isobornyl acrylate, dicyclopentanyl acrylate, dicyclopentenyl acrylate, hydroxymethyl acrylate, 2-hydroxyethyl acrylate, 3-hydroxypropyl acrylate, 4-hydroxybutyl acrylate, 5-hydroxypentyl acrylate, 6-hydroxyhexyl acrylate, 7-hydroxyheptyl acrylate, 8-hydroxyoctyl acrylate; methacrylic acid esters such as methyl methacrylate, ethyl methacrylate, n-propyl methacrylate, isopropyl methacrylate, n-butyl methacrylate, t-butyl methacrylate, isobutyl methacrylate, t-butyl methacrylate, t-butyl cyclohexyl methacrylate, pentyl methacrylate, neopentyl methacrylate, isoamyl methacrylate, hexyl methacrylate, heptyl methacrylate, octyl methacrylate, 2-ethylhexyl methacrylate, nonyl methacrylate, decyl methacrylate, lauryl methacrylate, 2-dimethylaminoethyl methacrylate, 2-diethylaminoethyl methacrylate, 2-dipropylaminoethyl methacrylate, 2-diphenylaminoethyl methacrylate, 3-(N,N-dimethylamino) propyl methacrylate, n-tetradecyl methacrylate, stearyl methacrylate, cyclohexyl methacrylate, hydroxyethyl methacrylate, benzyl methacrylate, isobornyl methacrylate, dicyclopentanyl methacrylate, dicyclopentenyl methacrylate, hydroxymethyl methacrylate, 2-hydroxyethyl methacrylate, 3-hydroxypropyl methacrylate, 4-hydroxybutyl methacrylate, 5-hydroxypentyl methacrylate, 6-hydroxyhexyl methacrylate, 7-hydroxyheptyl methacrylate, and 8-hydroxyoctyl methacrylate. More preferable examples include isobornyl (meth)acrylate, dicyclopentanyl (meth)acrylate, dicyclopentenyl (meth)acrylate, cyclohexyl (meth)acrylate, benzyl (meth)acrylate, methyl (meth)acrylate, and n-butyl (meth)acrylate. The monomers included in the specific monomer group may be used singly, or two or more thereof may be used in combination at any ratio.

The content of the monomer, selected from the specific monomer group, contained in the organic particles A is preferably 20% by mass or more, more preferably 30% by mass or more, still more preferably 40% by mass or more, and most preferably 50% by mass or more where all components of the organic particles A are assumed to constitute 100% by mass. The content is preferably 80% by mass or less. The content is more preferably 75% by mass or less, still more preferably 70% by mass or less, and most preferably 65% by mass or less. When the specific monomer group content in the organic particles A is 20% by mass or more, sufficient adhesiveness to electrodes can be obtained. When the content is 80% by mass or less, swelling property in an electrolytic solution can be suppressed, and excellent battery properties can be obtained.

Among the specific monomer groups, at least one of the (meth)acrylic acid ester monomers is preferably a (meth)acrylic acid ester monomer having a monocyclic cyclic hydrocarbon group or a (meth)acrylic acid ester monomer substituted with one or more alkyl groups in order to reduce the particle fusion at the time of producing the organic particles A.

The content of the (meth)acrylic acid ester monomer having a monocyclic cyclic hydrocarbon group or the (meth)acrylic acid ester monomer substituted with one or more alkyl groups contained in the organic particles A is preferably 20% by mass or more, more preferably 30% by mass or more, still more preferably 40% by mass or more, and most preferably 50% by mass or more where all components of the particles A are assumed to constitute 100% by mass. The content is preferably 80% by mass or less, more preferably 75% by mass or less, still more preferably 70% by mass or less, and most preferably 65% by mass or less. When the monomer content in the particles A is 20% by mass or more, sufficient adhesiveness to electrodes can be obtained. When the content is 80% by mass or less, swelling property in an electrolytic solution can be suppressed, and excellent battery properties can be obtained.

In addition, in order to obtain polymer particles excellent in stability upon particle formation, at least one of the (meth)acrylic acid ester monomers is preferably a (meth)acrylic acid ester monomer having a hydroxyl group.

The content of the (meth)acrylic acid ester monomer having a hydroxyl group contained in the organic particles A is preferably 1% by mass or more where all components of the particles A are assumed to constitute 100% by mass. The content is preferably 10% by mass or less. The content is more preferably 8% by mass or less, still more preferably 7% by mass or less. When the content of the hydroxyl group-containing (meth)acrylic acid ester monomer contained in the particles A is 1% by mass or more, there are obtained particles excellent in stability. When the content is 10% by mass or less, the moisture adsorption of the organic particles A can be suppressed, and excellent battery properties can be obtained.

Note that the content of the (meth)acrylate monomer having a hydroxyl group contained in the particles A can be measured using a known method. For example, first, the porous layer is detached from the porous film with water and an organic solvent such as an alcohol, and water and the organic solvent such as an alcohol are sufficiently dried thereby obtaining components contained in the porous layer. An organic solvent that dissolves the organic resin component is added to the obtained components thereby dissolving only the organic resin component. Subsequently, the organic solvent is dried and removed from the solution in which the organic resin component is dissolved, thereby extracting only the organic resin component. Using the obtained organic resin component, the content can be calculated from the signal intensity indicating the (meth)acrylate monomer having a hydroxyl group by nuclear magnetic resonance ($^1$H-NMR, $^{19}$F-NMR, $^{13}$C-NMR), infrared absorption spectroscopy (IR), X-ray photoelectron spectroscopy (XPS), X-ray fluorescence analysis (EDX), elemental analysis, thermal decomposition gas chromatograph mass spectrometer (thermal decomposition GC/MS), or the like. In particular, after the confirmation of the presence of the (meth)acrylate monomer having a hydroxyl group by pyrolysis GC/MS, the content of the (meth)acrylate monomer having a hydroxyl group can be determined by $^{13}$C-NMR (the organic resin component and an appropriate amount of a solvent (deuterated chloroform) are filled into a sample tube for solid NMR, followed by measurement in DD/MAS method after the mixture was allowed to stand overnight).

For the purpose of adjusting the glass transition temperature to a predetermined temperature or enhancing the chemical resistance to a chain carbonate included in nonaqueous electrolyte solution of secondary batteries, there can be used, for example, styrene-based monomers such as styrene, $\alpha$-methylstyrene, para-methylstyrene, t-butylstyrene, chlorostyrene, chloromethylstyrene, and hydroxymethylstyrene; olefin-based monomers such as ethylene and propylene; diene-based monomers such as butadiene and isoprene; amide-based monomers such as acrylamide. Among them, one kind may be used singly, or two or more kinds may be used in combination at an any ratio.

The glass transition temperature of the particles A is preferably -30°C or higher. The glass transition temperature is more preferably 10°C or higher, still more preferably 20°C or higher, and most preferably 35°C or higher. The glass transition temperature is preferably 100°C or lower, more preferably 80°C or lower, still more preferably 70°C or lower, and most preferably 60°C or lower. When the glass transition temperature is -30°C or higher, the swelling property of the particles A in an electrolytic solution is suppressed and battery properties are improved. When the glass transition temperature is 100°C or lower, adhesiveness to electrodes is excellent. In order to adjust the glass transition temperature within an appropriate range, a fluorine-containing (meth)acrylate monomer can be appropriately chosen.

There is no particular limitation on the method of polymerizing a homopolymer that includes a fluorine-containing (meth)acrylate monomer, a homopolymer that includes a monomer having two or more reactive groups per molecule, and a copolymer that includes a fluorine-containing (meth)acrylate monomer and a monomer having two or more reactive groups per molecule to form the organic particles A, and there may be used such method as a solution polymerization method, a suspension polymerization method, a bulk polymerization method, or an emulsion polymerization method. As the polymerization method, for example, such methods as ion polymerization, radical polymerization, or living radical polymerization may be used. By polymerization, an aqueous solution in which the organic particles A are dispersed in an aqueous solvent is produced. The aqueous solution thus produced may be used as it is, or the organic particles A may be extracted from the aqueous solution before it is used. It is preferable that the organic resin optionally contains a monomer included in a specific monomer group, and when the organic resin is a copolymer, it is possible to suppress the swelling property of the resin in an electrolytic solution and improve adhesive strength.

Examples of the emulsifier used in the polymerization include a cationic surfactant, an anionic surfactant, a nonionic surfactant, and an amphoteric surfactant. Among them, one kind thereof may be used singly, or two or more kinds thereof may be used in combination.

Examples of the cationic surfactant include alkylpyridinium chloride, alkyltrimethylammonium chloride, dialkyldimethylammonium chloride, and alkyldimethylbenzylammonium chloride.

Examples of the anionic surfactant include alkyl sulfate sodium salt, alkyl benzene sulfonate sodium salt, succinic acid dialkyl ester sulfonate sodium salt, alkyl diphenyl ether disulfonate sodium salt, polyoxyethylene alkyl ether sulfate sodium salt, and polyoxyethylene alkyl phenyl ether sulfate sodium salt. Among them, sodium lauryl sulfate, sodium dodecylbenzene sulfonate, sodium polyoxyethylene alkyl ether sulfate, sodium lauryl sulfate, and the like are preferable.

Examples of the nonionic surfactant include polyoxyethylene alkyl ether, polyoxyethylene alkyl aryl ether, polyoxyethylene fatty acid ester, and polyoxyethylene sorbitan fatty acid ester. In general, polyoxyethylene nonylphenyl ether, polyoxyethylene octylphenyl ether, or the like is used.

Examples of the amphoteric surfactant include lauryl betaine, hydroxyethylimidazoline sulfate sodium salt, and imidazoline sulfonate sodium salt.

With respect to the emulsifier, there can also be used a fluorine-based surfactant such as a perfluoroalkyl carboxylate, a perfluoroalkyl sulfonate, a perfluoroalkyl phosphate, a perfluoroalkyl polyoxyethylene, a perfluoroalkyl betaine, or ammonium perfluoroalkoxyfluorocarboxylate.

Furthermore, there can be used so-called reactive emulsifiers, which is copolymerizable with the above monomers, such as styrenesulfonic acid sodium salt, allylalkylsulfonic acid sodium salt, polyoxyethylene alkylallylphenyl ether ammonium sulfate, polyoxyethylene alkylallylphenyl ether, and in particular, it is preferable to be used together with 2-(1-allyl)-4-nonylphenoxy polyethylene glycol sulfate ammonium salt and 2-(1-allyl)-4-nonylphenoxy polyethylene glycol.

The amount of the emulsifier to be used is preferably 0.05% by mass or more and 10% by mass or less, per 100% by mass of the total amount of the fluorine-containing (meth)acrylate monomer, the monomer having two or more reactive groups per molecule, and the fluorine-free (meth)acrylate monomer.

With respect to polymerization initiators, there can be used water-soluble polymerization initiators such as sodium persulfate, potassium persulfate, ammonium persulfate, and hydrogen peroxide, or redox-based polymerization initiators obtained by combining these water-soluble polymerization initiators and reducing agents. Among them, potassium persulfate and ammonium persulfate are preferable. Examples of the reducing agent include sodium pyrobisulfite, sodium bisulfite, sodium sulfite, sodium thiosulfate, L-ascorbic acid, or a salt thereof, sodium formaldehyde sulfoxylate, ferrous sulfate, glucose. Among them, L-ascorbic acid or a salt thereof is preferable.

The amount of the polymerization initiator used is preferably 0.1 mass% or more and 3 mass% or less, per 100 mass% of the total amount of the fluorine-containing (meth)acrylate monomer, the monomer having two or more reactive groups per molecule, and the fluorine-free (meth) acrylate monomer.

The content of the fluorine-containing (meth)acrylate monomer in the organic particles A is preferably 20% by mass or more and 80% by mass or less, and more preferably more than 30% by mass and 70% by mass or less. The content is more preferably 40% by mass or more and 60% by mass or less. When the content is within the above range, adhesiveness to electrodes is excellent.

The content of the fluorine-containing (meth)acrylate monomer in the organic particles A can be measured by using any known method. For example, first, the porous layer is detached from the porous film with water and an organic solvent such as an alcohol, and water and the organic solvent such as an alcohol are sufficiently dried thereby obtaining components contained in the porous layer. An organic solvent that dissolves the organic resin component is added to the obtained components thereby dissolving only the organic resin component, so that the organic resin component is separated from the inorganic particles. Subsequently, the organic solvent is dried and removed from the solution in which the organic resin component is dissolved, thereby extracting only the organic resin component. Using the obtained organic resin component, the content can be calculated from the signal intensity indicating the fluorine-containing (meth)acrylate monomer by nuclear magnetic resonance ($^1$H-NMR, $^{19}$F-NMR), infrared absorption spectroscopy (IR), X-ray photoelectron spectroscopy (XPS), X-ray fluorescence analysis (EDX), elemental analysis, or the like.

The term "particles" used here includes particles partially formed into a film and fused with surrounding particles and a binder as well as particles having a particle shape. The shape of the particle is not particularly limited, and it may be any of a spherical shape, a polygonal shape, a flat shape, a fibrous shape, and the like.

The average particle size of the organic particles A in the porous layer is preferably 100 nm or more and 1,000 nm or less, more preferably 200 nm or more and 800 nm or less, and still more preferably 300 nm or more and 600 nm or less. When the average particle size is 100 nm or more, a porous structure is formed, and excellent battery properties are provided. When the average particle size is 1,000 nm or less, the thickness of the porous layer becomes appropriate, and deterioration of battery properties can be suppressed.

The average particle size of the organic particles A used here is a value obtained by measurement in the following method. Using a field emission scanning electron microscope (S-3400N manufactured by Hitachi, Ltd.), there were obtained an image of the surface of the porous layer at a magnification of 30,000 times and an EDX image for elements only contained in inorganic particles of the porous layer that includes components of inorganic particles and organic particles A. The image size obtained in this observation is 4.0 um × 3.0 um. Note that the number of pixels is 1,280 pixels × 1,024 pixels, and the size of one pixel is 3.1 nm × 2.9 nm.

Next, particles other than inorganic particles in the obtained EDX image were regarded as organic particles A.

Next, on the obtained image, among quadrangles at least three sides of which were in contact with the perimeter of the particle, there was drawn a quadrangle having the smallest area completely surrounding one organic particles A with three sides, the length of the longest side of the four sides was taken as the particle size (major axis diameter), the particle sizes of all the particles on the image were measured, and the arithmetic average value thereof was defined as the average particle size. Note that in a case where the number of the observed particles was less than 50 in the image taken, the organic particles A were measured in such a way that multiple images were taken so the total number of all the organic particles A included in the multiple images as to be at least 50, and the arithmetic average value thereof was defined as the average particle size.

(Binder)

The porous layer of the present invention may contain a binder such that the inorganic particles and the organic particles A included in the porous layer are brought into close contact with each other and these particles are brought into close contact with the porous substrate. The binder is preferably a resin that is electrochemically stable in the use range of the battery. Examples of the binder include a binder soluble in an organic solvent, a water-soluble binder, and an emulsion binder, and it may be used alone or in combination thereof.

In a case where a binder soluble in an organic solvent and a water-soluble binder are used, the viscosity of the binder itself is preferably 10,000 mPa·s or less at a concentration of 15% by mass. The viscosity is more preferably 8000 mPa·s or less, still more preferably 5000 mPa·s or less. When the concentration is 15% by mass and the viscosity is 10,000 mPa·s or less, an increase in the viscosity of the coating agent can be suppressed, and the organic particles A are unevenly distributed to the surface, so that adhesiveness to electrodes is improved.

In the case of using an emulsion binder, examples of the dispersant include, as water and an organic solvent, an alcohol-based solvent such as ethanol, a ketone-based solvent such as acetone, but an aqueous dispersion system is preferable from the viewpoint of handling and the miscibility with other components. The particle size of the emulsion binder is 30 to 1000 nm, preferably 50 to 500 nm, more preferably 70 to 400 nm, and still more preferably 100 to 300 nm. When the particle size of the emulsion binder is 30 nm or more, an increase in air permeation resistance can be suppressed, and battery properties are improved. When the particle size is 1000 nm or less, sufficient adhesiveness between the porous layer and the porous substrate can be obtained.

Examples of resins used for the binder include resins such as polyamide, polyamideimide, polyimide, polyetherimide, polyvinylidene fluoride, vinylidene fluoride-hexafluoropropylene copolymer, polytetrafluoroethylene, polysulfone, polyketone, polyether ketone, polycarbonate, polyacetal, polyvinyl alcohol, polyethylene glycol, cellulose ether, acrylic resin, polyethylene, polypropylene, polystyrene, and urethane. These may be used singly or in combination of two or more, as necessary.

The amount of the binder added is 0.5 to 10% by mass, preferably 1 to 8% by mass, and more preferably 2 to 5% by mass based on the total amount of the organic particles A and the inorganic particles. When the addition amount of the binder is 0.5% by mass or more, sufficient adhesiveness between the porous layer and the porous substrate can be obtained. When the content is 10% by mass or less, an increase in air permeation resistance can be suppressed, and battery properties are improved.

The addition amount in the case of using the emulsion binder is preferably 1% by mass or more based on the total amount of the particles A and the particles B. The addition amount is more preferably 5% by mass or more, still more preferably 7.5% by mass or more. The addition amount is preferably 30% by mass or less, more preferably 25% by mass or less, and still more preferably 20% by mass or less. When the addition amount of the emulsion-based binder is 1% by mass or more, sufficient adhesiveness between the porous layer and the porous substrate can be obtained. When the addition amount is 30% by mass or less, an increase in air permeation resistance can be suppressed, and battery properties are improved. In particular, when the addition amount is 7.5% by mass or more and 20% by mass or less, the emulsion binder interacts with the particles A, and adhesiveness to electrodes is improved, as well as the adhesiveness to the particles A and the particle B and adhesiveness of these particles to the base material are promoted.

(Formation of porous layer)

The porous film of the present embodiment is a porous film that includes a porous substrate, and a porous layer on at least one surface of the porous substrate, the porous layer contains inorganic particles and organic particles A, the organic particles A have adhesiveness to electrodes, wherein the inorganic particles A are contained in the porous layer in an amount ranging from 50% by mass to 95% by mass, and in 50 measurements of the surface elastic modulus of the porous layer, the value of $\alpha/\beta$ is ranging from 10 to 40, where $\alpha$ is the surface elastic modulus indicating the inorganic particles, and $\beta$ is the minimum of the measured values, and measured values within range from $\beta$ to $2\beta$ account for a percentage of from 30% to 100% in the 50 measurements, whereby an cost-effective porous film having excellent thermal dimensional stability and adhesiveness to electrodes and having excellent battery properties is achieved. A method of forming the porous layer will be described below.

An aqueous dispersion coating liquid is prepared by dispersing the inorganic particles and the organic particles A as components of the porous layer until a predetermined concentration. The inorganic particles and the organic particles A are dispersed, suspended, or emulsified in a solvent, thereby preparing the aqueous dispersion coating liquid. As the solvent for the aqueous dispersion coating liquid, at least water is used, and a solvent other than water may be further added. A solvent other than water is not particularly limited as long as it is a solvent in which the organic particles A can be dispersed, suspended, or emulsified without being dissolved and remaining in a solid state. Examples the solvent other than water include organic solvents such as methanol, ethanol, 2-propanol, acetone, tetrahydrofuran, methyl ethyl ketone, ethyl acetate, N-methylpyrrolidone, dimethylacetamide, dimethylformamide, and dimethylformamide. From lower environmental load, safety, and economic standpoints, the solvent is preferably an aqueous emulsion in which the organic particles A are suspended in water or in a mixed liquid of water and an alcohol.

To the coating liquid may be added as necessary a film formation aid, a dispersant, a thickener, a stabilizer, an antifoaming agent, a leveling agent, an electrode adhesiveness aid, and the like. The film formation aid is added in order to adjust the film-forming property of the organic resin and improve the adhesiveness to the porous substrate, and specific examples thereof include propylene glycol, diethylene glycol, ethylene glycol, butyl cellosolve acetate, butyl cellosolve, cellosolve acetate, and texanol. These film formation aids may be used singly or in combination of two or more, as necessary. The amount of the film formation aid added is preferably 0.1% by mass or more and 10% by mass or less, more preferably 1% by mass or more and 8% by mass or less, and still more preferably 2% by mass or more and 6% by mass or less based on the total amount of the coating fluid. When the amount is 0.1% by mass or more, sufficient film-forming properties can be obtained, and when the amount is 10% by mass or less, the porous substrate can be prevented from being impregnated with the coating liquid when the coating liquid is coated on the porous substrate, thereby enhancing the productivity.

A fluorine-free organic particles B may be added as an electrode adhesiveness promoter and a substrate adhesiveness promoter. When the organic particles B are added, the organic particles B interact with the organic particles A, and a part thereof is unevenly distributed to the surface, so that there may be a case where the adhesiveness between the porous layer and the electrode is improved. When the organic particles B present at the interface between the porous layer and the porous substrate, there may be a case where the base material adhesiveness is improved. Examples of the resin used for the organic particles B include a fluorine-free resin, and examples thereof include acrylic resins, polyethylene, polypropylene, polystyrene, and urethane. From the viewpoints of adhesiveness to electrodes and of adhesiveness to the porous substrate, it is preferable to use an acrylic resin, polyethylene, or polypropylene. The glass transition temperature of the organic particles B is preferably 10°C or higher. The glass transition temperature is more preferably 20°C or higher, still more preferably 30°C or higher, and most preferably 40°C or higher. The glass transition temperature is preferably 100°C or lower. The glass transition temperature is more preferably 90°C or lower, still more preferably 80°C or lower, and most preferably 70°C or lower. When the glass transition temperature is 10°C or higher, swelling property in an electrolytic solution can be suppressed, and battery properties are improved. When the glass transition temperature is 100°C or lower, sufficient adhesiveness to electrodes is obtained, and adhesiveness to the porous substrate is obtained.

The amount of the organic particles B added is preferably 1% by mass or more based on the total amount of the organic particles A and the inorganic particles. The amount is more preferably 1.5% by mass or more, still more preferably 2% by mass or more. The addition amount is preferably 30% by mass or less, more preferably 25% by mass or less, and still more preferably 20% by mass or less. When the addition amount of the organic particles B is 1% by mass or more, sufficient adhesiveness to electrodes can be obtained, and sufficient adhesiveness between the porous layer and the porous substrate can be obtained. When the addition amount is 30% by mass or less, an increase in air permeation resistance can be suppressed, and battery properties are improved.

The particle size of the organic particles B is preferably 10 nm or more. The particle size is more preferably 30 nm or more, still more preferably 50 nm or more, and most preferably 100 nm or more. The particle size is preferably 500 nm or less, more preferably 400 nm or less, still more preferably 300 nm or less, and most preferably 250 nm or less. When the particle size of the organic particles B is 10 nm or more, an increase in air permeation resistance can be suppressed, and battery properties are improved. When the particle size is 500 nm or less, the particles are unevenly distributed to the surface, and sufficient adhesiveness is obtained.

The particle size of the organic particles is 10 to 500 nm, preferably 20 to 400 nm, more preferably 30 to 300 nm, and still more preferably 50 to 250 nm. When the particle size of the organic particles is 10 nm or more, an increase in air permeation resistance can be suppressed, and battery properties are improved. When the particle size is 500 nm or less, the particles are unevenly distributed to the surface, and sufficient adhesiveness is obtained.

As a method of dispersing the coating fluid, a known method may be used. Examples thereof include a ball mill, a bead mill, a Sandoz mill, a roll mill, a homogenizer, an ultrasonic homogenizer, a high-pressure homogenizer, an ultrasonic device, and a paint shaker. A plurality of these mixing and dispersing machines may be used in combination to perform the dispersion stepwise.

Next, the obtained coating liquid is coated onto the porous substrate, and dried to dispose the porous layer. Examples of the coating method include dip coating, gravure coating, slit die coating, knife coating, comma coating, kiss coating, roll coating, bar coating, spray coating, dip coating, spin coating, screen printing, inkjet printing, pad printing, and other types of printing. The coating method is not limited thereto, and it should be selected according to preferable conditions such as an organic resin, a binder, a dispersant, a leveling agent, a solvent to be used, and a porous substrate to be used. The porous substrate may be subjected to a surface treatment such as corona treatment or plasma treatment in order to improve the coating property of the coating surface. The porous layer should be disposed on at least one surface of the porous substrate, but it is preferable that the porous layer is disposed on both surfaces of the porous layer in order to develop sufficient adhesiveness to electrodes.

The porous layer can be coated with the inorganic particles to dispose the heat resistant layer, and then the organic particles A can be coated thereon to dispose the adhesive layer, but multiple coating steps are required in this process, which results in a high expenses, and the entire surface of the porous layer is coated with the organic particles A, which may lead to blocking between the adhesive layers. Furthermore, there is also a possibility of deteriorating the removability from the core after winding in the manufacturing of the secondary battery. In addition, a large amount of binder is needed to be added in order to produce close contact between the inorganic particles each other and to bring the inorganic particles into close contact with the porous substrate, and there is a possibility that battery properties are deteriorated, which is not preferable. In contrast, the organic particles A and the inorganic particles are mixed in advance to prepare a single coating liquid and the porous layer is coated with this single coating liquid, thereby reducing cost, and both the organic particles A and the inorganic particles are allowed to present on the surface of the porous layer, so that the blocking resistance and the removability can also be improved. In addition, the organic particles A also play a role of a binder, so that the amount of the binder to be added can also be reduced, and excellent battery properties can be achieved. For these reasons, it is preferable that the organic particles A and the inorganic particles are mixed in advance and the porous layer is coated with single coating liquid.

The mass content of the organic particles A in the porous layer is preferably 5% by mass or more and 50% by mass or less, and more preferably 10% by mass or more and 40% by mass or less, based on 100% by mass of the entire porous layer. The mass content is more preferably 15% by mass or more and 30% by mass or less. When the mass content of the organic resin in the porous layer is 5% by mass or more and 50% by mass or less, sufficient adhesiveness to electrodes can be obtained.

The thickness of the porous layer is preferably 1.0 um or more and 8.0 $\mu$m or less, and more preferably more than 2.0 $\mu$m and 8.0 $\mu$m or less. The thickness is more preferably 2.0 $\mu$m or more and 7.5 $\mu$m or less. The thickness is particularly preferably 4.0 $\mu$m or more and 7.0 $\mu$m or less. The thickness of the porous layer as used herein refers to the thickness of the porous layer for a porous film including porous substrate on whose one surface having a porous layer disposed, and refers to the sum of the thicknesses of two porous layers for a porous film including porous substrate on whose both surface having a porous layer disposed. When the thickness of the porous layer is 1.0 $\mu$m or more, sufficient thermal dimensional stability and adhesiveness to electrodes can be obtained. When the thickness is 8.0 $\mu$m or less, a porous structure is formed, and battery properties are improved. It is also advantageous in terms of cost.

When the porous film of the present invention is immersed at 25°C for 24 hours in a solvent including at least one of dimethyl carbonate, ethyl methyl carbonate, and diethyl carbonate, the porous film after the immersion has an air permeation resistance 1.0 time or more and 2.0 times or less larger than that before the immersion. The air permeation resistance is preferably increased by 1.0 time or more and 1.7 times or less. The air permeation resistance is more preferably increased by 1.0 time or more and 1.5 times or less. When the air permeation resistance is increased over 1.0 time, this means that the porous layer of the porous film swells in the solvent, so that adhesiveness to electrodes is improved. When the air permeation resistance is increased by 2.0 times or less, swelling can suppress a decrease in ion permeability. When the air permeation resistance is increased by 1.0 time, the battery properties become the best.

The type of the solvent to be immersed includes dimethyl carbonate, ethyl methyl carbonate, and diethyl carbonate, which are chain carbonates included in the nonaqueous electrolytic solution of the secondary battery. One kind thereof may be used singly, or two or more kinds thereof may be combined according to an application. Further, they may be combined with a cyclic carbonate such as propylene carbonate, ethylene carbonate, or butylene carbonate.

In that case, the volume ratio of the chain carbonate of dimethyl carbonate, ethyl methyl carbonate, and diethyl carbonate is preferably 20% or more. The volume ratio is further preferably 35% or more, and more preferably 50% or more. When the volume ratio is 20% or more, the balance between the swelling property of the porous layer and the battery properties can be achieved.

[Porous substrate]

In the present embodiment, the porous substrate is a substrate having pores therein. In the present embodiment, examples of the porous substrate include a porous membrane having pores therein, a nonwoven fabric, and a porous membrane sheet made of a fibrous material. The material included in the porous substrate is preferably made from a resin that is electrically insulative, electrically stable, and also stable in an electrolytic solution. The resin to be used in view of imparting a shutdown function is preferably a thermoplastic resin having a melting point of 200°C or lower. The shutdown function used here refers to a function in which at the time of abnormal heat generation in the lithium ion battery, the resin is melted to close the porous structure and the ion migration is halted thereby stopping power generation.

Examples of the thermoplastic resin include polyolefin-based resins, and the porous substrate is preferably a polyolefin-based porous substrate. The polyolefin-based porous substrate is more preferably a polyolefin-based porous substrate having a melting point of 200°C or less. Specific examples of the polyolefin-based resin include polyethylene, polypropylene, an ethylenepropylene copolymer, a mixture of these, and examples thereof include a single-layered porous substrate containing 90% by mass or more of polyethylene, a multilayered porous substrate that includes polyethylene and polypropylene.

Examples of the method of producing a porous substrate include a method in which a polyolefin-based resin is formed into a sheet and then stretched to make the sheet porous, and a method in which a polyolefin-based resin is dissolved in a solvent such as liquid paraffin to form a sheet and then a solvent is extracted to make the sheet porous.

The thickness of the porous substrate is preferably 3 $\mu$m or more and 50 um or less, more preferably 5 $\mu$m or more and 30 um or less. When the thickness of the porous substrate is 50 um or less, there can be suppressed an increase in internal resistance of the porous substrate. When the thickness of the porous substrate is 3 um or more, the porous substrate can be produced, and sufficient mechanical characteristics can be obtained.

The air permeation resistance of the porous substrate is preferably 50 seconds/100 cc or more and 1,000 seconds/100 cc or less. The air permeation resistance of the porous substrate is more preferably 50 seconds/100 cc or more and 500 seconds/100 cc or less. When the air permeation resistance is 1,000 seconds/100 cc or less, sufficient ion mobility is obtained, and battery properties can be improved. When the air permeation resistance of the porous substrate is 50 seconds/100 cc or more, sufficient mechanical characteristics are obtained.

[Porous film]

The porous film of the present embodiment is a porous film having the above-described porous layer on at least one surface of a porous substrate. The porous layer is preferably made to be sufficiently porous to have ion permeability, and the air permeation resistance of the porous film is preferably 50 seconds/100 cc or more and 1,000 seconds/100 cc or less. More preferably, the air permeation resistance is 50 seconds/100 cc or more and 500 seconds/100 cc or less. More preferably, the air permeation resistance is 50 seconds/100 cc or more and 300 seconds/100 cc or less. When the air permeation resistance is 1,000 seconds/100 cc or less, sufficient ion mobility is obtained, and battery properties can be improved. When the air permeation resistance of the porous substrate is 50 seconds/100 cc or more, sufficient mechanical characteristics are obtained.

[Secondary battery]

The porous film of the present embodiment can be suitably used for a separator for a secondary battery such as a lithium ion battery. Lithium ion batteries have a configuration in which a secondary battery separator and an electrolyte are interposed between a positive electrode in which a positive electrode active material is layered on a positive electrode current collector and a negative electrode in which a negative electrode active material is layered on a negative electrode current collector.

The positive electrode is a layered body in which a positive electrode material, which includes an active material, a binder resin, and a conductivity aid, is layered on a current collector, and examples of the active material include lithium-containing transition metal oxides having a layered structure such as $LiCoO_2$, $LiNiO_2$, and $Li(NiCoMn)O_2$, spinel-type manganese oxides such as $LiMn_2O_4$, and iron-based compounds such as $LiFePO_4$. As the binder resin, a resin having high oxidation resistance should be used. Specific examples thereof include fluororesins, acrylic resins, and styrene-butadiene resins. As the conductivity aid, carbon materials such as carbon black and graphite are used. As the current collector, a metal foil is suitable, and in particular, an aluminum foil is often used.

The negative electrode is a layered body in which a negative electrode material, which includes an active material and a binder resin, is layered on a current collector, and examples of the active material include carbon materials such as artificial graphite, natural graphite, hard carbon, and soft carbon, lithium alloy-based materials such as tin and silicon, metal materials such as Li, and lithium titanate ($Li_4Ti_5O_{12}$). Examples of binder resins used include a fluororesin, an acrylic resin, and a styrene-butadiene resin. As the current collector, a metal foil is suitable, and in particular, a copper foil is often used.

The electrolytic solution is a place where ions migrate between the positive electrode and the negative electrode in the secondary battery, and has a configuration in which an electrolyte is dissolved in an organic solvent. Examples of the electrolyte include $LiPF_6$, $LiBF_4$, and $LiClO_4$, and $LiPF_6$ is suitably used from the viewpoint of solubility in an organic solvent and ionic conductivity. Examples of the organic solvent include ethylene carbonate, propylene carbonate, fluoroethylene carbonate, dimethyl carbonate, diethyl carbonate, ethyl methyl carbonate. These organic solvents may be used in mixture of two or more kinds thereof.

As a method of producing a secondary battery, first, an active material and a conductivity aid are dispersed in a solution of a binder resin to prepare a coating liquid for an electrode, this coating liquid is coated onto a current collector, and a solvent is dried and removed thereby obtaining each of positive electrode and negative electrode. The thickness of the coating film after drying is preferably 50 um or more and 500 $\mu$m or less. A secondary battery separator is disposed between the obtained positive electrode and negative electrode so as to be in contact with an active material layer of each electrode, then enclosed in an exterior material such as an aluminum laminate film, into which an electrolytic solution is injected, thereafter a negative electrode lead and a safety valve are installed, followed by sealing of the exterior material. The secondary battery thus obtained has high adhesiveness between the electrode and the secondary battery separator, has excellent battery properties, and can be manufactured at low cost.

Examples

Hereinafter, the present invention will be specifically described with reference to Examples, but the present invention is not limited thereto in any way. The measurement method used in this example is shown below.

[Measurement method]

(1) Air permeation resistance

The central portion of a sample having a size of 100 mm × 100 mm was measured in accordance with JIS P 8117 (2009) using an Oken Type Air permeation resistance tester (EG01-5-1-MR manufactured by ASAHI SEIKO CO., LTD). The above measurement was performed on 3 samples, the measured values were averaged, and the average value was defined as the air permeation resistance (sec/100 cc).

(2) Film thickness of porous layer

A sample was cut out with a microtome to create its cross section, and the cross section was observed with a field emission scanning electron microscope (S-800 manufactured by Hitachi, Ltd., acceleration voltage 26 kV). The largest distance between the outer surface of the porous layer and the interface with the porous substrate was defined as the thickness, and the thickness of the porous layer on one side was measured in the case of one side layer, and the thicknesses of the porous layers on both sides were measured and the sum of both layer thicknesses was regarded as the thickness in the case of both side later. A central portion of a sample having a size of 100 mm × 100 mm was measured. The above measurement was performed on five samples, and the measured values were averaged.

(3) Average particle size of organic particles A

Using a field emission scanning electron microscope (S-3400N manufactured by Hitachi, Ltd.), there were obtained an image of the surface of the porous layer at a magnification of 30,000 times and an EDX image for elements only contained in inorganic particles of the porous layer that includes components of inorganic particles and organic particles A. The image size obtained in this observation is 4.0 um × 3.0 um. Note that the number of pixels is 1,280 pixels × 1,024 pixels, and the size of one pixel is 3.1 nm × 2.9 nm.

Next, particles other than inorganic particles in the obtained EDX image were regarded as organic particles A.

Next, on the obtained image, among quadrangles at least three sides of which were in contact with the perimeter of the particle, there was drawn a quadrangle having the smallest area completely surrounding one organic particles A with three sides, the length of the longest side of the four sides was taken as the particle size (major axis diameter), the particle sizes of all the particles on the image were measured, and the arithmetic average value thereof was defined as the average particle size. Note that in a case where the number of the observed particles was less than 50 in the image taken, the organic particles A were measured in such a way that multiple images were taken so the total number of all the organic particles A included in the multiple images as to be at least 50, and the arithmetic average value thereof was defined as the average particle size.

(4) Glass transition temperature of organic particles A

In differential scanning calorimetry (DSC) in accordance with "JIS K 7121: 2012, Testing Methods for Transition Temperatures of Plastics", in the second temperature rise curve after initial first temperature rising and cooling, a point of intersection between a straight line, which was extended from the baseline of the curve at a temperature lower than the transition temperature toward higher temperature side, and a tangent line drawn at a point where the curve had a largest gradient in a region of stepwise change of the glass transition was defined as a glass transition temperature.

(5) Inorganic particle content in porous layer

The porous layer was detached from the 10 cm $\times$ 10 cm porous film with 40 g of water, and water and an organic solvent such as an alcohol was sufficiently dried to give components contained in the porous layer. After measuring the mass of the total amount of the obtained components, the components were combusted at a high temperature at which the organic resin component was melted and decomposed, and the mass of only the inorganic particles was measured. The inorganic particle content in the porous layer was calculated in % by mass from the formula: (mass of inorganic particles/mass of total amount of components) $\times$ 100.

(6) Surface elastic modulus

The surface elastic modulus of the porous layer was measured by using an AFM (Dimension Icon (manufactured from 2006)) manufactured by Bruker AXS. The measurement mode chosen was Quantitative Nanomechanical Mapping, and a probe (Tap 525) was used. Using a sample whose elastic modulus is known, the spring constant and the tip curvature of the probe were set, and then the surface elastic modulus of the porous layer was measured in a measurement range from 100 nm. The measurement was made on the central portion of 50 samples having a size of 10 mm $\times$ 10 mm cut out from the porous film. Among the 50 measured values obtained from the 50 porous films, a measured value within a range from $\pm$ 10% of the Vickers hardness indicating the elastic modulus of the inorganic particles was defined as a surface elastic modulus $\alpha$ indicating the inorganic particles. The minimum value of 50 measured values was defined as $\beta$. From these values $\alpha$ and $\beta$, the value of $\alpha/\beta$ and the percentage (%) included in a range from $\beta$ to $2\beta$ were calculated.

(7) Change ratio in air permeation resistance after solvent immersion

Three samples having a size of 100 mm $\times$ 100 mm were each immersed at 25°C for 24 hours in 2 g of a solvent including at least one of dimethyl carbonate, ethyl methyl carbonate, and diethyl carbonate. Thereafter, the sample was taken out and dried, followed by measurement of one central portion of each sample in accordance with JIS P 8117 (2009) using an Oken Type Air permeation resistance tester (EG01-5-1-MR manufactured by ASAHI SEIKO CO., LTD.), and the average value thereof was regarded as the air permeation resistance (sec/100 cm$^3$). Using the air permeation resistance obtained in the above (1) and the air permeation resistance after solvent immersion, the change ratio in air permeation resistance after solvent immersion was calculated from the following formula.

$$\text{Change ratio in air permeation resistance after solvent immersion} = \text{air permeation resistance after solvent immersion/initial air permeation resistance}$$

(8) Appearance of coating film

A sample having a size of 100 $\times$ 200 mm was placed on a black drawing paper, and the appearance of the coating film was observed and evaluated on the basis of the following indexes.

- Very good in coating film appearance: no coating streaks, no coating cissing
- Good in coating film appearance: either coating streaks or coating cissing is slightly observed.

- Acceptable in coating film appearance: coating streaks and coating cissing are slightly observed.
- Poor in coating film appearance: coating streaks and coating cissing are marked, and difficult to evaluate

(9) Thermal shrinkage (thermal dimensional stability)

From 3 samples having a size of 100 mm × 100 mm, the length from the midpoint of one side to the midpoint of the opposite side of each sample was measured, and heat treatment was performed in an oven at 150°C for 1 hour under a tensionless condition. After the heat treatment, the sample was taken out, the length between the midpoints at the same points as before the heat treatment was measured, and the thermal shrinkage was calculated from the following equation. Two points were calculated from one sample at the same time, and the average value of all the numerical values was regarded as the thermal shrinkage (thermal dimensional stability). A sample having a thermal shrinkage of less than 5% was rated excellent, a sample having a thermal shrinkage of 5% or more and less than 10% was rated very good, a sample having a thermal shrinkage of 10% or more and less than 20% was rated good, a sample having a thermal shrinkage of 20% or more and less than 40% was rated acceptable, and a sample having a thermal shrinkage of 40% or more was rated poor.

```
Thermal shrinkage (%) = [(length between middle
points before heat treatment - length between middle points
after heat treatment)/(length between middle points before
heat treatment)] × 100.
```

(10) Adhesiveness to electrodes

A positive electrode having a size of 15 mm × 100 mm, which includes an active material of $Li(Ni_{5/10}Mn_{2/10}Co_{3/10})O_2$, a binder of a vinylidene fluoride resin, and a conductivity aid of acetylene black and graphite, was placed with a porous film in such a manner that the active material and the porous layer were in contact with each other, and they were hot pressed at 0.5 MPa, 100°C, and 0.2 m/min with a hot roll press machine, followed by manual peeling off using tweezers, thereby evaluating the adhesive strength in the following 4 stages. Similarly, there was also measured the adhesive strength between the porous film and the negative electrode including graphite as an active material, a vinylidene fluoride resin as a binder, and carbon black as a conductivity aid. The average adhesive strength obtained by obtained by comprehensive evaluation of respective results of the positive electrode and the negative electrode was defined as the adhesive strength and evaluated.

- Excellent in adhesive strength: the electrode was peeled off from the porous film only with a very strong force.
- Very good in adhesive strength: the electrode was peeled off from the porous film only with a strong force.
- Good in adhesive strength: the electrode was peeled off from the porous film with a slightly strong force.
- Acceptable in adhesive strength: the electrode was peeled off from the porous film with a weak force.
- Poor in adhesive strength: the electrode was peeled off from the porous film with an extremely weak force.

(11) Preparation of battery

By using a planetary mixer, 92 parts by mass of $Li(Ni_{5/10}Mn_{2/10}Co_{3/10})O_2$ as a positive electrode active material, 2.5 parts by mass of acetylene black and 2.5 parts by mass of graphite as a positive electrode conductivity aid, and 3 parts by mass of polyvinylidene fluoride as a positive electrode binder were dispersed in N-methyl-2-pyrrolidone by using a planetary mixer to prepare a positive electrode slurry, which was coated on an aluminum foil, dried and rolled to prepare a positive electrode sheet (coating weight: 9.5 mg/cm²).

The positive electrode sheet was cut into a size of 40 mm × 40 mm. At this time, the tab bonding portion for current collection, which had no active material layer, was cut out so as to have a size of 5 mm × 5 mm outside of the active material surface. An aluminum tab having a width of 5 mm and a thickness of 0.1 mm was ultrasonically welded to the tab bonding portion.

By using a planetary mixer, 98 parts by mass of natural graphite as a negative electrode active material, 1 part by mass of carboxymethyl cellulose as a thickener, and 1 part by mass of a styrene-butadiene copolymer as a negative electrode binder were dispersed in water to prepare a negative electrode slurry, which was coated on a copper foil, dried and rolled to prepare a negative electrode sheet (application basis weight: 5.5 mg/cm²).

The negative electrode sheet was cut into a size of 45 mm × 45 mm. At this time, the tab bonding portion for current collection, which had no active material layer, was cut out so as to have a size of 5 mm × 5 mm outside of the active material surface. A copper tab having the same size as the positive electrode tab was ultrasonically welded to the tab bonding portion.

Next, the porous film was cut into a size of 55 mm × 55 mm, and the positive electrode and the negative electrode were disposed on both surfaces of the porous film such that the porous film was separated by the active material layer, and the positive electrode coated portion is entirely opposed to the negative electrode coated portion to obtain an electrode group. The positive electrode, the porous film, and the negative electrode were put in one aluminum laminate film of 90 mm × 200 mm, the long side of the aluminum laminate film was folded, and two long sides of the aluminum laminate film were heat-sealed to form a bag-shaped aluminum laminate film.

$LiPF_6$ as a solute was dissolved in a mixed solvent of ethylene carbonate: diethyl carbonate = 1: 1 (volume ratio) so as to have a concentration of 1 mol/liter, and thus the electrolytic solution was prepared and used. Into the bag-shaped aluminum laminate film was injected 1.5 g of the electrolytic solution and was impregnated under reduced pressure while the aluminum laminate film was heat-sealed at the short side portion to obtain a laminate type battery.

(12) Discharge load characteristics

The discharge load characteristics were evaluated according to the following procedure and evaluated in terms of the discharge capacity retention.

Using the laminate type battery described above, the discharge capacity at a discharge rate of 0.5C and the discharge capacity at a discharge rate of 10C were measured at 25°C, and the discharge capacity retention was calculated as (discharge capacity at 10C)/(discharge capacity at 0.5C) × 100. Here, the charge condition was constant current charge at a rate of 0.5C and at 4.3 V, and the discharge condition was constant current discharge at 2.7 V. Five samples of the laminate type batteries were prepared, the results of the maximum and minimum discharge capacity retention were excluded, and the remaining three measurement results were averaged and the averaged value was regarded as the capacity retention. A discharge capacity retention of less than 55% was rated poor, a discharge capacity retention of 55% or more and less than 60% was rated acceptable, a discharge capacity retention of 60% or more and less than 65% was rated good, a discharge capacity retention of 65% or more and less than 75% was rated very good, and a discharge capacity retention of 75% or more was rated excellent.

(13) Charge-discharge cycle characteristics

Charge-discharge cycle characteristics were evaluated according to the following procedure, and evaluated in terms of the discharge capacity retention.

<1st to 300th cycle>

One cycle consisting of charging and discharging was repeated 300 times at 25°C, charging condition was constant current charge at 2C and 4.3 V, and discharging condition was constant current discharge at 2C and 2.7 V.

<Calculation of discharge capacity retention>

The discharge capacity retention was calculated by (discharge capacity at 300th cycles)/(discharge capacity at 1st cycle) × 100. Five samples of the laminate type batteries were prepared, the results of the maximum and minimum discharge capacity retention were excluded, and the remaining three measurement results were averaged and the averaged value was regarded as the capacity retention. When the discharge capacity retention was less than 60%, the charge/discharge cycle characteristics were rated poor. When the discharge capacity retention was 60% or more and less than 65%, the charge/discharge cycle characteristics were rated acceptable. When the discharge capacity retention was 65% or more and less than 70%, the charge/discharge cycle characteristics were rated good. When the discharge capacity retention was 70% or more and less than 75%, the charge/discharge cycle characteristics were rated very good. When the discharge capacity retention was 75% or more, the charge/discharge cycle characteristics were rated excellent.

(Example 1)

Into a reactor were charged 120 parts of ion-exchanged water and 1 part of ADEKA REASORB SR-1025 (Emulsifier, manufactured by ADEKA Corporation) and stirring was started. To this was added 0.4 parts of 2,2'-azo-bis(2-(2-imidazoline-2-yl) propane) (manufactured by Wako Pure Chemical Industries, Ltd.) under a nitrogen atmosphere, and a monomer mixture that includes a component of 35 parts of 2,2,2-trifluoroethyl methacrylate (3FM), 52 parts of cyclohexyl acrylate (CHA), 2 parts of hydroxyethyl methacrylate (HEMA), 11 parts of urethane diacrylate DP-600BU (manufactured by NOF CORPORATION), 9 parts of ADEKA REASORB SR-1025 (Emulsifier, manufactured by ADEKA Corporation), and 115 parts of ion-exchanged water was continuously added dropwise at 60°C over 2 hours, and polymerized over 4 hours after completion of the dropwise addition to produce a dispersion liquid a containing organic particles A that include a component of a copolymer. The pH of the dispersion liquid a was adjusted to about 8 with aqueous ammonia. With respect to the obtained organic particles A, the particle size, glass transition temperature, and minimum filming temperature were measured.

Alumina particles (Vickers hardness: 20 GPa) having an average particle size of 0.4 $\mu$m were used as inorganic particles, and water in the same amount as the inorganic particles was added as a solvent, 2% by mass of an acrylic resin (water-soluble) as a binder with respect to the amount of the inorganic particles, and 2% by mass of carboxymethyl cellulose as a dispersant with respect to the amount of the inorganic particles were added, and then dispersed with a bead mill to prepare a dispersion liquid b.

The dispersion liquid a and the dispersion liquid b were dispersed in water such that the inorganic particle content in the porous layer was 70% by mass, and mixed with a stirrer. Furthermore, an acrylic emulsion binder (acrylic particles, 100 nm) was added as a binder in an amount of 17% by mass with respect to the total amount of the particles A and the particles B to prepare a coating solution.

The obtained coating liquid was coated on both surfaces of a polyethylene porous substrate (thickness: 7 um; air permeation resistance: 110 sec/100 cc) with a wire bar, and dried in a hot air oven (preset drying temperature: 50°C) until the contained solvent was volatilized to form a porous layer, thereby producing a porous film. With respect to the obtained porous film, there were measured the surface elastic moduli of the porous layer $\alpha$, $\beta$, $\alpha/\beta$, the percentage of the number of measured values of the surface elastic modulus included in the range from $\beta$ to $2\beta$, the thickness of the porous layer, the air permeation resistance, the coating appearance, the thermal shrinkage (thermal dimensional stability), the adhesiveness to electrodes, the change ratio in air permeation resistance after the solvent immersion (solvent: diethyl carbonate), the discharge load characteristics, and the charge/discharge cycle characteristics. Regarding the change ratio in air permeation resistance after solvent immersion, the change ratio in air permeation resistance in the case of immersion using dimethyl carbonate (indicated as "DEC" in the table) as a solvent was measured.

With respect to the obtained porous film, Table 2 shows the results of the measurement of the surface elastic moduli of the porous layer $\alpha$, $\beta$, $\alpha/\beta$, the percentage of the number of measured values of the surface elastic modulus included in the range from $\beta$ to $2\beta$, the thickness of the porous layer, the air permeation resistance, the coating appearance, the thermal shrinkage (thermal dimensional stability), the adhesiveness to electrodes, the air permeation resistance change rate after solvent immersion (solvent: diethyl carbonate), the discharge load characteristics, and the charge/discharge cycle characteristics.

(Example 2)

A porous film of the present invention was obtained in the same manner as in Example 1 except that the composition ratio of the organic particles A was changed to the composition shown in Table 1-1. The measurement results of the porous film are shown in Table 2.

(Example 3)

A porous film was obtained in the same manner as in Example 2 except that urethane diacrylate DP-600BU (manufactured by NOF CORPORATION) was changed to urethane diacrylate UF-07DF (manufactured by Kyoeisha Chemical Co., Ltd.).

(Example 4)

A porous film was obtained in the same manner as in Example 2 except that urethane acrylate DP-600BU (manufactured by NOF CORPORATION) was changed to urethane diacrylate UF-C052 (manufactured by Kyoeisha Chemical Co., Ltd.) .

(Example 5)

A porous film was obtained in the same manner as in Example 2 except that urethane acrylate DP-600BU (manufactured by NOF CORPORATION) was changed to alkylene glycol dimethacrylate PDE-600 (manufactured by Kyoeisha Chemical Co., Ltd.). The change ratio in air permeation resistance after solvent immersion was measured by using dimethyl carbonate as a solvent, in addition to this, the change ratio in air permeation resistance in the case of immersing with a mixed solution in which 1.0 mol of lithium hexafluorophosphate (LiPF6) was dissolved in 1 kg of a mixed solvent of ethylene carbonate and diethyl carbonate at a volume ratio of 1: 1 as an electrolytic solution for battery measurement.

(Example 6)

A porous film was obtained in the same manner as in Example 2 except that alkylene glycol dimethacrylate PDE-600 (manufactured by Kyoeisha Chemical Co., Ltd.) was changed to polyalkylene glycol diacrylate ADP-400 (manufactured by Kyoeisha Chemical Co., Ltd.).

(Example 7)

A porous film of the present invention was obtained in the same manner as in Example 5 except that the composition ratio of the organic particles A was changed to the composition shown in Table 1-1. The measurement results of the porous film are shown in Table 2.

(Example 8)

A porous film of the present invention was obtained in the same manner as in Example 5 except that the composition ratio of the organic particles A was changed to the composition shown in Table 1-1. The measurement results of the porous film are shown in Table 2.

(Example 9)

A porous film of the present invention was obtained in the same manner as in Example 5 except that the composition ratio of the organic particles A was changed to the composition shown in Table 1-2. The measurement results of the porous film are shown in Table 2.

(Example 10)

A porous film of the present invention was obtained in the same manner as in Example 5 except that the composition ratio of the organic particles A was changed to the composition shown in Table 1-2. The measurement results of the porous film are shown in Table 2.

(Example 11)

A porous film of the present invention was obtained in the same manner as in Example 5 except that the composition ratio of the organic particles A was changed to the composition shown in Table 1-2. The measurement results of the porous film are shown in Table 2.

(Example 12)

A porous film of the present invention was obtained in the same manner as in Example 5 except that the composition ratio of the organic particles A was changed to the composition shown in Table 1-2. The measurement results of the porous film are shown in Table 2.

(Example 13)

A porous film of the present invention was obtained in the same manner as in Example 5 except that the mass content of the inorganic particles in the porous layer was 90% by mass. The measurement results of the porous film are shown in Table 2.

(Example 14)

A porous film of the present invention was obtained in the same manner as in Example 5 except that the mass content of the inorganic particles in the porous layer was 50% by mass. The measurement results of the porous film are shown in Table 2.

(Example 15)

A porous film of the present invention was obtained in the same manner as in Example 1 except that the thickness of the porous layer was 4.0 um. The measurement results of the porous film are shown in Table 2.

(Example 16)

A porous film of the present invention was obtained in the same manner as in Example 5 except that the composition ratio of the organic particles A was changed to the composition shown in Table 1-2. The measurement results of the porous film are shown in Table 2.

(Example 17)

A porous film of the present invention was obtained in the same manner as in Example 5 except that the composition ratio of the organic particles A was changed to the composition shown in Table 1-3. The measurement results of the porous film are shown in Table 2.

(Example 18)

A porous film of the present invention was obtained in the same manner as in Example 5 except that the composition ratio of the organic particles A was changed to the composition shown in Table 1-3. The measurement results of the porous film are shown in Table 2.

(Example 19)

A porous film of the present invention was obtained in the same manner as in Example 5 except that the composition ratio of the organic particles A was changed to the composition shown in Table 1-3. The measurement results of the porous film are shown in Table 2.

(Example 20)

A porous film of the present invention was obtained in the same manner as in Example 5 except that the composition ratio of the organic particles A was changed to the composition shown in Table 1-3. The measurement results of the porous film are shown in Table 2.

(Example 21)

A porous film of the present invention was obtained in the same manner as in Example 5 except that the composition ratio of the organic particles A was changed to the composition shown in Table 1-3. The measurement results of the porous film are shown in Table 2.

(Comparative Example 1)

A porous film of the present invention was obtained in the same manner as in Example 5 except that the composition ratio of the organic particles A was changed to the composition shown in Table 1-3. The measurement results of the porous film are shown in Table 2.

(Comparative Example 2)

A porous film of the present invention was obtained in the same manner as in Example 5 except that the composition ratio of the organic particles A was changed to the composition shown in Table 1-3. The measurement results of the porous film are shown in Table 2.

(Comparative Example 3)

A porous film was obtained in the same manner as in Example 5 except that the mass content of the inorganic particles in the porous layer was 30% by mass. The measurement results of the porous film are shown in Table 2.

(Comparative Example 4)

A porous film was obtained in the same manner as in Example 5 except that the mass content of the inorganic particles in the porous layer was 96% by mass. The measurement results of the porous film are shown in Table 2.

[Table 1-1]

Table 1-1

| | | Organic particle A | | | | | | | | | Inorganic particle | | Binder |
|---|---|---|---|---|---|---|---|---|---|---|---|---|---|
| | Fluorine-containing (meth) acrylate monomer | Monomer having two or more reactive groups per molecule | Specified monomer group | The content of fluorine-containing (meth)acrylate monomer (% by mass) | The content of monomer having two or more reactive groups per molecule (% by mass) | The content of (meth)acrylic acid ester monomer having a monocyclic cyclic hydrocarbon group (% bv mass) | The content of (meth) acrylic acid ester monomer having a hydroxyl group (% bv mass) | Particle size (nm) | Glass transition temperature (°C) | Type | Content (% by mass) | Type |
| Example 1 | 2,2,2-trifluoroethyl methacrylate | urethane diacrylate | acrylic acid ester monomer methacrylic acid ester monomer | 35 | 11 | 52 | 2 | 180 | 45 | alumina | 70 | acrylic emulsion binder |
| Example 2 | 2,2,2-trifluoroethyl methacrylate | urethane diacrylate | acrylic acid ester monomer methacrylic acid ester monomer | 40 | 11 | 47 | 2 | 170 | 50 | alumina | 70 | acrylic emulsion binder |
| Example 3 | 2,2,2-trifluoroethyl methacrylate | urethane diacrylate | acrylic acid ester monomer methacrylic acid ester monomer | 40 | 11 | 47 | 2 | 170 | 50 | alumina | 70 | acrylic emulsion binder |

(continued)

| | Organic particle A | | | | | | | | | Inorganic particle | | Binder |
|---|---|---|---|---|---|---|---|---|---|---|---|---|
| | Fluorine-containing (meth) acrylate monomer | Monomer having two or more reactive groups per molecule | Specified monomer group | The content of fluorine-containing (meth)acrylate monomer (% by mass) | The content of monomer having two or more reactive groups per molecule (% by mass) | The content of (meth)acrylic acid ester monomer having a monocyclic cyclic hydrocarbon group (% bv mass) | The content of (meth) acrylic acid ester monomer having a hydroxyl group (% bv mass) | Particle size (nm) | Glass transition temperature (°C) | Type | Content (% by mass) | Type |
| Example 4 | 2,2,2-trifluoroethyl methacrylate | urethane diacrylate | acrylic acid ester monomer methacrylic acid ester monomer | 40 | 11 | 47 | 2 | 170 | 50 | alumina | 70 | acrylic emulsion binder |
| Example 5 | 2,2,2-trifluoroethyl methacrylate | alkylene glycol dimethacrylate | acrylic acid ester monomer methacrylic acid ester monomer | 40 | 11 | 47 | 2 | 180 | 50 | alumina | 70 | acrylic emulsion binder |
| Example 6 | 2,2,2-trifluoroethyl methacrylate | alkylene glycol dimethacrylate | acrylic acid ester monomer methacrylic acid ester monomer | 40 | 11 | 47 | 2 | 180 | 50 | alumina | 70 | acrylic emulsion binder |
| Example 7 | 2,2,2-trifluoroethyl methacrylate | alkylene glycol dimethacrylate | acrylic acid ester monomer methacrylic acid ester monomer | 20 | 11 | 67 | 2 | 170 | 30 | alumina | 70 | acrylic emulsion binder |

| | Organic particle A | | | | | | | | | Inorganic particle | | Binder |
|---|---|---|---|---|---|---|---|---|---|---|---|---|
| | Fluorine-containing (meth)acrylate monomer | Monomer having two or more reactive groups per molecule | Specified monomer group | The content of fluorine-containing (meth)acrylate monomer (% by mass) | The content of monomer having two or more reactive groups per molecule (% by mass) | The content of (meth)acrylic acid ester monomer having a monocyclic cyclic hydrocarbon group (% by mass) | The content of (meth) acrylic acid ester monomer having a hydroxyl group (% by mass) | Particle size (nm) | Glass transition temperature (°C) | Type | Content (% by mass) | Type |
| Example 8 | 2,2,2-trifluoroethyl methacrylate | alkylene glycol dimethacrylate | acrylic acid ester monomer methacrylic acid ester monomer | 80 | 11 | 7 | 2 | 180 | 80 | alumina | 70 | acrylic emulsion binder |

[Table 1-2]

Table 1-2

| | Organic particle A | | | | | | | | | Inorganic particle | | Binder |
|---|---|---|---|---|---|---|---|---|---|---|---|---|
| | Fluorine-containing (meth) acrylate monomer | Monomer having two or more reactive groups per molecule | Specified monomer group | The content of fluorine-containing (meth)acrylat e monomer (% by mass) | The content of monomer having two or more reactive groups per molecule (% by mass) | The content of (meth)acrylic acid ester monomer having a monocyclic cyclic hydrocarbon group (% by mass) | The content of (meth) acrylic acid ester monomer having a hydroxyl group (% by mass) | Particle size (nm) | Glass transition temperature (°C) | Type ' | Content (% by mass) | Type |
| Example 9 | 2,2,2-trifluoroethyl methacrylate | alkylene glycol dimethacrylate | acrylic acid ester monomer methacrylic acid ester monomer | 40 | 14 | 44 | 2 | 180 | 42 | alumina | 70 | acrylic emulsion binder |
| Example 10 | 2,2,2-trifluoroethyl methacrylate | alkylene glycol dimethacrylate | acrylic acid ester monomer methacrylic acid ester monomer | 40 | 20 | 38 | 2 | 170 | 42 | alumina | 70 | acrylic emulsion binder |
| Example 11 | 2,2,2-trifluoroethyl methacrylate | alkylene glycol dimethacrylate | acrylic acid ester monomer methacrylic acid ester monomer | 40 | 28 | 30 | 2 | 180 | 35 | alumina | 70 | acrylic emulsion binder |

(continued)

| | Organic particle A | | | | | | | | | | Inorganic particle | | Binder |
|---|---|---|---|---|---|---|---|---|---|---|---|---|---|
| | Fluorine-con-taining (meth) acrylate mono-mer | Monomer having two or more reactive groups per molecule | Specified monomer group | The content of fluorine-containing (meth)acr-ylat e mono-mer (% by mass) | The con-tent of monomer having two or more reactive groups per molecule (% by mass) | The content of (meth)acrylic acid ester monomer hav-ing a monocy-clic cyclic hy-drocarbon group (% by mass) | The content of (meth) acrylic acid ester mon-omer hav-ing a hy-droxyl group (% by mass) | Particle size (nm) | Glass transi-tion tempera-ture (°C) | | Type ' | Content (% by mass) | Type |
| Example 12 | 2,2,2-trifluoroethyl methacrylate | alkylene glycol dimethacrylate | acrylic acid ester monomer methacrylic acid ester monomer | 20 | 28 | 50 | 2 | 170 | 10 | | alumina | 70 | acrylic emulsion binder |
| Example 13 | 2,2,2-trifluoroethyl methacrylate | alkylene glycol dimethacrylate | acrylic acid ester monomer methacrylic acid ester monomer | 40 | 11 | 47 | 2 | 170 | 50 | | alumina | 90 | acrylic emulsion binder |
| Example 14 | 2,2,2-trifluoroethyl methacrylate | alkylene glycol dimethacrylate | acrylic acid ester monomer methacrylic acid ester monomer | 40 | 11 | 47 | 2 | 180 | 50 | | alumina | 50 | acrylic emulsion binder |
| Example 15 | 2,2,2-trifluoroethyl methacrylate | alkylene glycol dimethacrylate | acrylic acid ester monomer methacrylic acid ester monomer | 40 | 11 | 47 | 2 | 180 | 50 | | alumina | 70 | acrylic emulsion binder |

(continued)

| | Organic particle A | | | | | | | | | | Inorganic particle | | Binder |
|---|---|---|---|---|---|---|---|---|---|---|---|---|---|
| | Fluorine-con-taining (meth) acrylate mono-mer | Monomer having two or more reactive groups per molecule | Specified monomer group | The content of fluorine-containing (meth)acr-ylat e mono-mer (% by mass) | The con-tent of monomer having two or more reactive groups per molecule (% by mass) | The content of (meth)acrylic acid ester monomer hav-ing a monocy-clic cyclic hy-drocarbon group (% by mass) | The content of (meth) acrylic acid ester mon-omer hav-ing a hy-droxyl group (% by mass) | Particle size (nm) | Glass transi-tion tempera-ture (°C) | | Type ' | Content (% by mass) | Type |
| Example 16 | 2,2,2-trifluoroethyl methacrylate | glycidyl methacrylate | acrylic acid ester monomer methacrylic acid ester monomer | 40 | 11 | 47 | 2 | 180 | 65 | | alumina | 70 | acrylic emulsion binder |

[Table 1-3]

Table 1-3

| | Organic particle A | | | | | | | | | | Inoroanic particle | | Binder |
|---|---|---|---|---|---|---|---|---|---|---|---|---|---|
| | Fluorine-containing (meth) acrylate monomer | Monomer having two or more reactive groups per molecule | Specified monomer group | The content of fluorine-containing (meth)acrylate monomer (% by mass) | The content of monomer having two or more reactive groups per molecule (% by mass) | The content of (meth) acrylic acid ester monomer having a monocyclic cyclic hydrocarbon group (% bv mass) | The content of (meth) acrylic acid ester monomer having a hydroxyl group (% by mass) | Particle size (nm) | Glass transition temperature (°C) | Type | Content (% by mass) | Type |
| Example 17 | 2,2,2-trifluoroethyl methacrylate | alkylene glycol dimethacrylate | acrylic acid ester monomer methacrylic acid ester monomer | 40 | 11 | 48 | 1 | 180 | 48 | alumina | 70 | acrylic emulsion binder |
| Example 18 | 2,2,2-trifluoroethyl methacrylate | alkylene glycol dimethacrylate | acrylic acid ester monomer methacrylic acid ester monomer | 40 | 11 | 44 | 5 | 180 | 45 | alumina | 70 | acrylic emulsion binder |
| Example 19 | 2,2,2-trifluoroethyl methacrylate | alkylene glycol dimethacrylate | acrylic acid ester monomer methacrylic acid ester monomer | 40 | 11 | 39 | 10 | 180 | 40 | alumina | 70 | acrylic emulsion binder |

(continued)

| | Organic particle A | | | | | | | | | | Inoroanic particle | | Binder |
|---|---|---|---|---|---|---|---|---|---|---|---|---|---|
| | Fluorine-containing (meth) acrylate monomer | Monomer having two or more reactive groups per molecule | Specified monomer group | The content of fluorine-containing (meth)acrylate monomer (% by mass) | The content of monomer having two or more reactive groups per molecule (% by mass) | The content of (meth) acrylic acid ester monomer having a monocyclic cyclic hydrocarbon group (% bv mass) | The content of (meth) acrylic acid ester monomer having a hydroxyl group (% by mass) | Particle size (nm) | Glass transition temperature (°C) | | Type | Content (% by mass) | Type |
| Example 20 | 2,2,2-trifluoroethyl methacrylate | alkylene glycol dimethacrylate | acrylic acid ester monomer methacrylic acid ester monomer | 60 | 11 | 27 | 2 | 180 | 65 | | alumina | 70 | acrylic emulsion binder |
| Example 21 | 2,2,2-trifluoroethyl methacrylate | alkylene glycol dimethacrylate | acrylic acid ester monomer methacrylic acid ester monomer | 40 | 11 | 47 | 2 | 180 | 45 | | alumina | 70 | water-soluble acryl |
| Comparative Example 1 | 2,2,2-trifluoroethyl methacrylate | alkylene glycol dimethacrylate | acrylic acid ester monomer methacrylic acid ester monomer | 40 | 10 | 48 | 2 | 180 | 52 | | alumina | 70 | acrylic emulsion binder |
| Comparative Example 2 | 2,2,2-trifluoroethyl methacrylate | alkylene glycol dimethacrylate | acrylic acid ester monomer methacrylic acid ester monomer | 40 | 7 | 51 | 2 | 170 | 53 | | alumina | 70 | acrylic emulsion binder |

| | Organic particle A | | | | | | | | | Inoroanic particle | | Binder |
|---|---|---|---|---|---|---|---|---|---|---|---|---|
| | Fluorine-containing (meth) acrylate monomer | Monomer having two or more reactive groups per molecule | Specified monomer group | The content of fluorine-containing (meth)acrylate monomer (% by mass) | The content of monomer having two or more reactive groups per molecule (% by mass) | The content of (meth) acrylic acid ester monomer having a monocyclic cyclic hydrocarbon group (% bv mass) | The content of (meth) acrylic acid ester monomer having a hydroxyl group (% by mass) | Particle size (nm) | Glass transition temperature (°C) | Type | Content (% by mass) | Type |
| Comparative Example 3 | 2,2,2-trifluoroethyl methacrylate | alkylene glycol dimethacrylate | acrylic acid ester monomer methacrylic acid ester monomer | 40 | 11 | 47 | 2 | 180 | 50 | alumina | 30 | acrylic emulsion binder |
| Comparative Example 4 | 2,2,2-trifluoroethyl methacrylate | alkylene glycol dimethacrylate | acrylic acid ester monomer methacrylic acid ester monomer | 40 | 11 | 47 | 2 | 180 | 50 | alumina | 96 | acrylic emulsion binder |

EP 4 131 627 A1

[Table 2]

[Table 2]

Table 2

| | Porous layer | | | Immersion into electrolytic solution | | Thickness of porous layer (μm) | Air permeation resistance (sec/100cc) | Appearance of coating film | Thermal shrinkage (thermal dimensional stability) | Adhesiveness to electrodes | Discharge load characteristics | Charge-discharge cycle characteristics |
|---|---|---|---|---|---|---|---|---|---|---|---|---|
| | α | α/β | Percentage from β to 2β (%) | Type of electrolytic solution | Air permeation resistance change ratio (%) | | | | | | | |
| Example 1 | 20 | 12 | 68 | DEC | 1.3 | 5 | 140 | Very good | Very good | Good | Very good | Very good |
| Example 2 | 20 | 13 | 68 | DEC | 1.3 | 5 | 140 | Very good | Very good | Good | Very good | Very good |
| Example 3 | 20 | 12 | 64 | DEC | 1.3 | 5 | 140 | Very good | Very good | Good | Very good | Very good |
| Example 4 | 20 | 11 | 62 | DEC | 1.3 | 5 | 140 | Very good | Very good | Good | Very good | Very good |
| Example 5 | 20 | 13 | 70 | DEC / Electrolytic solution for battery measurement | 1.4 | 5 | 140 | Very good | Very good | Very good | Very good | Very good |
| Example 6 | 20 | 12 | 72 | DEC | 13 | 5 | 140 | Very good | Very good | Very good | Very good | Very good |
| Example 7 | 20 | 13 | 66 | DEC | 13 | 5 | 160 | Very good | Very good | Good | Very good | Very good |
| Example 8 | 20 | 11 | 64 | DEC | 1.3 | 5 | 130 | Acceptable | Very good | Acceptable | Very good | Very good |
| Example 9 | 20 | 15 | 68 | DEC | 1.1 | 5 | 140 | Very good | Very good | Very good | Excellent | Excellent |
| Example 10 | 20 | 17 | 62 | DEC | 1.1 | 5 | 140 | Very good | Very good | Excellent | Excellent | Excellent |
| Example 11 | 20 | 25 | 64 | DEC | 1.4 | 5 | 150 | Very good | Very good | Excellent | Good | Good |
| Example 12 | 20 | 25 | 68 | DEC | 15 | 5 | 200 | Very good | Very good | Excellent | Good | Good |
| Example 13 | 20 | 12 | 30 | DEC | 13 | 5 | 140 | Very good | Very good | Acceptable | Very good | Very good |
| Example 14 | 20 | 12 | 70 | DEC | 13 | 5 | 140 | Very good | Acceptable | Excellent | Good | Good |
| Example 15 | 20 | 12 | 72 | DEC | 1.2 | 4 | 120 | Very good | Very good | Very good | Excellent | Excellent |
| Example 16 | 20 | 11 | 70 | DEC | 1.8 | 5 | 150 | Very good | Very good | Acceptable | Good | Good |
| Example 17 | 20 | 13 | 70 | DEC | 1.0 | 5 | 145 | Good | Very good | Very good | Excellent | Excellent |

| | Porous layer | | | Immersion into electrolytic solution | | Thickness of porous layer ($\mu$m) | Air permeation resistance (sec/100cc) | Appearance of coating film | Thermal shrinkage (thermal dimensional stability) | Adhesiveness to electrodes | Discharge load characteristics | Charge-discharge cycle characteristics |
|---|---|---|---|---|---|---|---|---|---|---|---|---|
| | $\alpha$ | $\alpha/\beta$ | Percentage from $\beta$ to $2\beta$ (%) | Type of electrolytic solution | Air permeation resistance change ratio (%) | | | | | | | |
| Example 18 | 20 | 13 | 68 | DEC | 1.7 | 5 | 140 | Very good | Very good | Very good | Good | Good |
| Example 19 | 20 | 13 | 70 | DEC | 2.0 | 5 | 130 | Very good | Very good | Excellent | Acceptable | Acceptable |
| Example 20 | 20 | 13 | 68 | DEC | 13 | 5 | 140 | Good | Very good | Good | Very good | Very good |
| Example 21 | 20 | 13 | 70 | DEC | 1.7 | 5 | 150 | Very good | Very good | Verv aood | Good | Good |
| Comparative Example 1 | 20 | 9 | 60 | DEC | 13 | 5 | 140 | Very good | Very good | Poor | Good | Good |
| Comparative Example 2 | 20 | 8 | 72 | DEC | 1.6 | 5 | 150 | Very good | Very good | Poor | Acceptable | Acceptable |
| Comparative Example 3 | 20 | 12 | 80 | DEC | 1.2 | 5 | 150 | Good | Poor | Very good | Acceptable | Acceptable |
| Comparative Example 4 | 20 | 12 | 25 | DEC | 1.2 | 5 | 140 | Very good | Excellent | Poor | Excellent | Excellent |

In Tables 1-1, 1-2, 1-3, and Table 2, each sample in Example 1 to 21 is a porous film in which on at least one surface of a porous substrate is disposed a porous layer that includes: inorganic particles; and organic particles A having adhesiveness to electrodes. The inorganic particle content in the porous layer is 50% by mass to 95% by mass. In 50 measurements of the surface elastic modulus of the porous layer, the value of $\alpha/\beta$ is 10 to 40, where $\alpha$ is the surface elastic modulus indicating the inorganic particles, and $\beta$ is the minimum of the measured values out of the 50 measured values, and the percentage of the measured values that are included in the range from $\beta$ to $2\beta$ is 30% to 100%, so that there can be achieved a porous film that has adhesiveness to electrodes, and excellent thermal dimensional stability and battery properties.

In contrast, in Comparative Examples 1 and 2, the crosslinkable fluorine-containing (meth)acrylate monomer content in the organic particles A is 10% by mass or less, as a result sufficient adhesiveness to electrodes cannot be obtained. In Comparative Example 3, the crosslinkable fluorine-containing (meth)acrylate monomer content is higher than 28% by mass, as a result the glass transition temperature and the minimum filming temperature are lower than 10°C, and sufficient battery properties are not obtained. In Comparative Example 4, the inorganic particle content in the porous layer is lower than 50% by mass, as a result sufficient thermal dimensional stability cannot be obtained. In Comparative Example 5, the inorganic particle content in the porous layer is more than 95% by mass, as a result sufficient adhesiveness to electrodes cannot be obtained.

## Claims

1. A porous film comprising: a porous substrate; and a porous layer on at least one surface of the porous substrate, the porous layer containing inorganic particles and organic particles A, the organic particles A having adhesiveness to electrodes, wherein the inorganic particles are contained in the porous layer in an amount ranging from 50% by mass to 95% by mass, and in 50 measurements of a surface elastic modulus of the porous layer, a value of $\alpha/\beta$ is ranging from 10 to 40, where $\alpha$ is the surface elastic modulus indicating the inorganic particles, and $\beta$ is a minimum of measured values, and the percentage of the 50 measured values that are included in a range from $\beta$ to $2\beta$ is 30% to 100%.

2. The porous film according to claim 1, wherein the organic particles A have a mixture that contains: a polymer that includes a fluorine-containing (meth)acrylate monomer; and a polymer that includes a monomer having two or more reactive groups per molecule, or the organic particles A have a copolymer that contains: a fluorine-containing (meth)acrylate monomer; and a monomer having two or more reactive groups per molecule.

3. The porous film according to claim 2, wherein the organic particles A contain the monomer having two or more reactive groups per molecule in an amount of more than 10% by mass and 30% by mass or less where all components of the organic particles A are assumed to constitute 100% by mass.

4. The porous film according to claim 2 or 3, wherein the monomer having two or more reactive groups per molecule is a (meth)acrylate having two or more functional groups.

5. The porous film according to any one of claims 2 to 4, wherein the monomer having two or more reactive groups per molecule is alkylene glycol di(meth)acrylate or urethane di(meth)acrylate.

6. The porous film according to any one of claims 1 to 5, wherein the organic particles A further includes at least one monomer selected from the group consisting of an unsaturated carboxylic acid monomer, a (meth)acrylic acid ester monomer, a styrene-based monomer, an olefin-based monomer, a diene-based monomer, and an amide-based monomer, and the organic particles A contain the monomer in an amount of 20% by mass or more and 80% by mass or less.

7. The porous film according to any one of claims 2 to 6, wherein the copolymer having the fluorine-containing (meth)acrylate monomer and the monomer having two or more reactive groups per molecule is a copolymer further containing at least one monomer selected from the group consisting of an unsaturated carboxylic acid monomer, a (meth)acrylic acid ester monomer, a styrene-based monomer, an olefin-based monomer, a diene-based monomer, and an amide-based monomer.

8. The porous film according to any one of claims 2 to 7, wherein the organic particles A contain the fluorine-containing (meth)acrylate monomer in an amount of more than 20% by mass and 80% by mass or less.

9. The porous film according to claim 6 or 7, wherein at least one of the (meth)acrylic acid ester monomers is a (meth)acrylic acid ester monomer having a hydroxyl group, and the organic particles A contain the (meth)acrylic acid ester monomer having a hydroxyl group in an amount of 1% by mass or more and 10% by mass or less.

10. The porous film according to any one of claims 1 to 9, wherein when the porous film is immersed at 25°C for 24 hours in a solvent including at least one of dimethyl carbonate, ethyl methyl carbonate, and diethyl carbonate, the porous film after the immersion has an air permeation resistance 1.0 time or more and 2.0 times or less larger than that before the immersion.

11. The porous film according to any one of claims 1 to 10, wherein the organic particles A have a glass transition temperature of -30°C or higher and 100°C or lower.

12. The porous film according to any one of claims 1 to 11, wherein the porous layer contains a fluorine-free organic particle B.

13. A separator for secondary battery, comprising the porous film according to any one of claims 1 to 12.

14. A secondary battery, comprising the separator for secondary battery according to claim 13.

## INTERNATIONAL SEARCH REPORT

| International application No. |
|---|
| PCT/JP2021/012849 |

### A. CLASSIFICATION OF SUBJECT MATTER

Int.Cl. H01M50/489(2021.01)i, B32B5/32(2006.01)i, C08F220/24(2006.01)i, H01M50/434(2021.01)i, H01M50/443(2021.01)i, H01M50/44(2021.01)i, H01M50/451(2021.01)i

FI: H01M50/489, B32B5/32, C08F220/24, H01M50/434, H01M50/443B, H01M50/443E, H01M50/443M, H01M50/446, H01M50/451

According to International Patent Classification (IPC) or to both national classification and IPC

### B. FIELDS SEARCHED

Minimum documentation searched (classification system followed by classification symbols)

Int.Cl. H01M50/489, B32B5/32, C08F220/24, H01M50/434, H01M50/443, H01M50/446, H01M50/451

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY(STN)

### C. DOCUMENTS CONSIDERED TO BE RELEVANT

| Category* | Citation of document, with indication, where appropriate, of the relevant passages | Relevant to claim No. |
|---|---|---|
| A | WO 2013/125645 A1 (ZEON CORPORATION) 29 August 2013 (2013-08-29) | 1-14 |
| A | WO 2015/064411 A1 (ZEON CORPORATION) 07 May 2015 (2015-05-07) | 1-14 |

☐ Further documents are listed in the continuation of Box C.    ☒ See patent family annex.

| | |
|---|---|
| *   Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 May 2021 | 08 June 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.

PCT/JP2021/012849

| | | |
|---|---|---|
| WO 2013/125645 A1 | 29 August 2013 | (Family: none) |
| WO 2015/064411 A1 | 07 May 2015 | US 2016/0268565 A1<br>CN 105659426 A<br>KR 10-2016-0078967 A |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6191597 B

- WO 2018034094 A